# EUROPÄISCHE PATENTSCHRIFT

(11) **EP 2 895 369 B1**
(45) Veröffentlichungstag und Bekanntmachung des Hinweises auf die Patenterteilung: **25.03.2020**
(21) Anmeldenummer: 13762789.9
(22) Anmeldetag: 10.09.2013
(51) Int. Cl.: B61C 3/00, B60L 5/19, B60C 3/00

(54) **SCHIENENFAHRZEUG MIT AKUSTISCH OPTIMIERTER BEFESTIGUNG EINER STROMABNEHMEREINRICHTUNG**
RAIL VEHICLE HAVING ACOUSTICALLY OPTIMISED FASTENING OF A CURRENT COLLECTOR APPARATUS
VÉHICULE FERROVIAIRE AVEC FIXATION À OPTIMISATION ACOUSTIQUE D'UN DISPOSITIF À PANTOGRAPHE

(30) Priorität: 12.09.2012 WO PCT/EP2012/003830; 12.10.2012 WO PCT/EP2012/070317
(43) Veröffentlichungstag der Anmeldung: 22.07.2015
(73) Patentinhaber: Bombardier Transportation GmbH, 10785 Berlin (DE)
(72) Erfinder: TESSMER, Wolfram, 13587 Berlin (DE); MAASS, Jörg-Torsten, 16515 Oranienburg-Eden (DE); KLOSS, Andreas, 13357 Berlin (DE); KOHRS, Torsten, 13353 Berlin (DE); AUGUST, Peter, 3127 Berlin (DE)
(74) Vertreter: Cohausz & Florack
(86) Internationale Anmeldenummer: PCT/EP2013/068765
(87) Internationale Veröffentlichungsnummer: WO 2014/041005

(56) Entgegenhaltungen:
- DE-A1- 19 856 636
- FR-A1- 2 880 604
- JP-A- 2006 159 938
- JP-A- 2009 179 191
- US-A- 4 567 335
- US-A- 6 131 520

## Beschreibung

### HINTERGRUND DER ERFINDUNG

Die vorliegende Erfindung betrifft ein Schienenfahrzeug, insbesondere für den Hochgeschwindigkeitsverkehr, mit einem Wagenkasten, der einem Innenraum aufweist und eine Fahrzeuglängsrichtung, eine Fahrzeugquerrichtung sowie eine Fahrzeughöhenrichtung definiert, und einer Stromabnehmereinrichtung zur Montage in einer Vertiefung in einem Dachbereich des Wagenkastens. Der Wagenkasten weist im Bereich der Vertiefung eine ausgeprägt in der Fahrzeughöhenrichtung verlaufende Seitenwandstruktur und eine abgewinkelt zu der Seitenwandstruktur sowie im Wesentlichen in der Fahrzeugquerrichtung verlaufende Dachstruktur auf. Die Stromabnehmereinrichtung ist über eine die Stromabnehmereinrichtung in der Fahrzeugquerrichtung überragende Trägereinrichtung auf dem Wagenkasten abgestützt. Die vorliegende Erfindung betrifft weiterhin eine entsprechende Stromabnehmeranordnung für ein solches Fahrzeug.

Bei solchen modernen, aus einer Oberleitung mit elektrischer Energie versorgten Schienenfahrzeugen, wie sie beispielsweise aus der FR 2 880 604 A1 bekannt sind, welche typischerweise mit vergleichsweise hohen Nennbetriebsgeschwindigkeiten verkehren, besteht in der Regel das Problem, dass eine aktive Stromabnehmereinrichtung sowohl durch die an ihr wirkenden aerodynamischen Lasten als auch durch die Kontaktlasten mit der Oberleitung zu Schwingungen angeregt werden. Diese Schwingungen werden zum einen über die Struktur der Stromabnehmereinrichtung (als so genannter Körperschall) in die stützende Dachstruktur des Wagenkastens eingeleitet, führen mithin also zu Vibrationen in der Dachstruktur. Zudem bewirken die Schwingungen der Stromabnehmereinrichtung eine unmittelbare Emission von Schallwellen an der Oberfläche der Stromabnehmereinrichtung, welche sich (als so genannter Luftschall) in der umgebenden Atmosphäre ausbreiten. Ein Teil dieser Schallwellen trifft wiederum auf die angrenzende Dachstruktur des Wagenkastens und regt diese ebenfalls zu Schwingungen an. Die auf diesen beiden Wegen induzierten Schwingungen der Dachstruktur breiten sich wiederum als Körperschall in der Fahrzeugstruktur aus und führen letztlich zu einer mehr oder weniger starken Schallimmission in den Innenraum des Fahrzeugs.

Die Strom führenden Bauteile der Stromabnehmereinrichtung müssen typischerweise einen bestimmten Mindestabstand zur angrenzenden Wagenkastenstruktur aufweisen, um einen Spannungsüberschlag auf die Wagenkastenstruktur sicher zu verhindern. Hierzu sind bei dem Fahrzeug aus der FR 2 880 604 A1 mehrere Isolatoren entsprechender Höhe vorgesehen, über welche die Strom führenden Bauteile des Stromabnehmers auf der Trägereinrichtung abgestützt und von dieser elektrisch isoliert sind. Diese Gestaltung bedingt jedoch, dass die Stromabnehmereinrichtung auch im eingefahrenen Ruhezustand eine vergleichsweise große Bauhöhe aufweist.

Dabei bilden ein im Bereich der Längsmittenebene des Wagenkastens angeordneter mittiger Isolator und zwei in der Fahrzeugquerrichtung fluchtende, zu beiden Seiten der Längsmittenebene angeordnete seitliche Isolatoren eine Dreipunktabstützung. Die beiden seitlichen Isolatoren stützen dabei unter anderem das um die Fahrzeuglängsachse auf die Stromabnehmereinrichtung wirkende oszillierende Drehmoment ab, welches aus der Kontaktkraft resultiert, die in dem (aus Gründen einer möglichst gleichmäßigen Abnutzung der Schleifleiste) in der Fahrzeugquerrichtung hin und her wandernden Kontaktpunkt der Schleifleiste mit der Oberleitung wirkt. Der Abstand der seitlichen Isolatoren in der Fahrzeugquerrichtung ist bei solchen Gestaltungen in der Regel möglichst gering gewählt, um die Angriffsfläche für den Fahrtwind und damit den aerodynamischen Widerstand der Stromabnehmereinrichtung so gering wie möglich zu halten.

Um die aerodynamischen Lasten auf die Stromabnehmereinrichtung und den aerodynamischen Widerstand des Fahrzeugs weiter zu reduzieren, ist die Stromabnehmereinrichtung häufig in einer Vertiefung im Dach des Wagenkastens angeordnet. Dies hat jedoch den Nachteil, dass der Bereich der mechanischen Anbindung der Stromabnehmereinrichtung an die Dachstruktur näher an den Innenraum des Fahrzeugs rückt, wodurch sich nicht zuletzt die akustischen Probleme im Innenraum verstärken, welche durch den Schalleintrag bedingt sind, der durch die Stromabnehmereinrichtung induziert wird.

### KURZE BESCHREIBUNG DER ERFINDUNG

Der vorliegenden Erfindung liegt daher die Aufgabe zu Grunde, ein Fahrzeug sowie eine Stromabnehmeranordnung der eingangs genannten Art zur Verfügung zu stellen, welche die oben genannten Nachteile nicht oder zumindest in geringerem Maße mit sich bringt und insbesondere auf einfache Weise im Betrieb einen möglichst geringen Strömungswiderstand des Fahrzeugs bei möglichst geringer Geräuschimmission in den Innenraum des Fahrzeugs ermöglicht.

Die vorliegende Erfindung löst diese Aufgabe ausgehend von einem Fahrzeug gemäß dem Oberbegriff des Anspruchs 1 durch die im kennzeichnenden Teil des Anspruchs 1 angegebenen Merkmale.

Der vorliegenden Erfindung liegt die technische Lehre zu Grunde, dass man auf einfache Weise im Betrieb einen möglichst geringen Strömungswiderstand des Fahrzeugs bei möglichst geringer Geräuschimmission in den Innenraum des Fahrzeugs erzielen kann, wenn die Abstützung der Trägereinrichtung und der darauf montierten Stromabnehmereinrichtung unter Umgehung der im Wesentlichen horizontal bzw. senkrecht zur Fahrzeughöhenrichtung verlaufenden Dachstruktur im Wesentlichen unmittelbar über die Seitenwandstruktur des Wagenkastens erfolgt.

Hierdurch werden zum einen die Eigenschaften im Zusammenhang mit der Einleitung von Körperschall in die Struktur des Wagenkastens verbessert, da die Stützbreite bei der Abstützung der Stromabnehmereinrichtung erhöht wird, sodass beispielsweise bei der Abstützung von Drehmomenten um die Fahrzeuglängsachse geringere, die Wagenkastenstruktur anregende Stützkräfte und damit letztlich geringere Schwingungsamplituden erzielt werden.

Zudem verlagert die Trägereinrichtung die Kraftangriffspunkte der Stützkräfte aus dem primär horizontal bzw. senkrecht zur Fahrzeughöhenrichtung ausgerichteten Bereich der Dachstruktur in den Bereich der meist primär in der Fahrzeughöhenrichtung verlaufenden Seitenwände des Wagenkastens. Hierdurch wird erreicht, dass die in die Wandstruktur des Wagenkastens eingeleiteten Stützkräfte nicht mehr primär senkrecht zur Wandebene der abstützenden Struktur in die Dachstruktur eingeleitet werden, sondern primär in der Ebene der abstützenden seitlichen Wandstruktur wirken. Dies ist insoweit von Vorteil, als die Anregung der stützenden Wandstrukturen zu Biegeschwingungen reduziert wird, die unter akustischen Gesichtspunkten besonders kritisch sind.

Weiterhin entsteht durch die die jeweilige Seitenwandstruktur fortsetzende Stützeinrichtung, die daran angreifende Trägereinrichtung und die darunter liegende, ebenfalls an der Seitenwandstruktur angreifende Dachstruktur eine (in der zur Fahrzeuglängsrichtung senkrechten Schnittebene) generell ringförmige, typischerweise im Wesentlichen trapezförmige Struktur, welche zu einer vorteilhaften Versteifung der Wagenkastenstruktur führt, welche die durch die Vertiefung eingebrachte strukturelle Schwächung der Wagenkastenstruktur zumindest teilweise kompensiert.

Diese Versteifung hat zudem den Vorteil, dass sich die Eigenfrequenzen der montierten Gesamtstruktur in höhere, von den Passagieren als weniger störend empfundene Frequenzbereiche verschieben lassen.

Schließlich können bei dieser Gestaltung in einfacher Weise über eine geeignete zusätzliche Luftschallreduktionseinrichtung die Eigenschaften im Zusammenhang mit der Einleitung von Luftschall in die Struktur des Wagenkastens verbessert werden, indem beispielsweise zwischen der Stromabnehmereinrichtung und der Dachstruktur eine seitlich überstehende Abschirmeinrichtung vorgesehen wird, welche die Dachstruktur großflächig gegen Schallwellen abschirmt, welche von der Stromabnehmereinrichtung ausgehen. Auch hiermit lässt sich die Schwingungsanregung der Dachstruktur und damit die Schallemission in den Innenraum des Fahrzeugs erheblich reduzieren.

Gemäß einem Aspekt betrifft die vorliegende Erfindung daher ein Schienenfahrzeug, insbesondere für den Hochgeschwindigkeitsverkehr, mit einem Wagenkasten, der einen Innenraum aufweist und eine Fahrzeuglängsrichtung, eine Fahrzeugquerrichtung sowie eine Fahrzeughöhenrichtung definiert, und einer Stromabnehmereinrichtung zur Montage in einer Vertiefung in einem Dachbereich des Wagenkastens. Der Wagenkasten weist im Bereich der Vertiefung eine ausgeprägt in der Fahrzeughöhenrichtung verlaufende Seitenwandstruktur und eine abgewinkelt zu der Seitenwandstruktur sowie im Wesentlichen in der Fahrzeugquerrichtung verlaufende Dachstruktur auf. Die Stromabnehmereinrichtung ist über eine die Stromabnehmereinrichtung in der Fahrzeugquerrichtung überragende Trägereinrichtung auf dem Wagenkasten abgestützt. Die Trägereinrichtung ist zur Reduktion eines von der Stromabnehmereinrichtung induzierten Eintrags von Schwingungen in die Dachstruktur über eine den Verlauf der Seitenwandstruktur im Wesentlichen fortsetzende, die Dachstruktur in der Fahrzeughöhenrichtung überragende Stützeinrichtung auf dem Wagenkasten abgestützt. Darüber hinaus weist die Stützeinrichtung zum Anschluss der Trägereinrichtung einen Trägeranschlussbereich auf, der in Fahrzeughöhenrichtung auf einen Trägeranschlussniveau in einer Trägeranschlusshöhe über einem Grundniveau liegt, welches eine Oberseite der Dachstruktur am Grund der Vertiefung definiert.

Die Gestaltung der Stützeinrichtung sowie die Abstützung bzw. Anbindung der Trägereinrichtung an der Stützeinrichtung bzw. der Seitenwandstruktur kann grundsätzlich auf beliebige geeignete Weise erfolgen, solange hiermit eine Schwingungsanregung der Dachstruktur so weit wie möglich vermieden wird, indem die Schwingungsenergie aus der Trägereinrichtung möglichst ohne Umweg über die Dachstruktur in die Seitenwandstruktur eingeleitet wird.

Bei bevorzugten, weil einfach gestalteten Varianten der Erfindung definiert der Trägeranschlussbereich bevorzugt mit einem auf der gegenüberliegenden Fahrzeugseite angeordneten (bevorzugt im Wesentlichen spiegelsymmetrisch zur einer Mittenlängsebene des Wagenkastens gestalteten) Trägeranschlussbereich in der Fahrzeugquerrichtung eine Anschlussbreite.

Der die Seitenwandstruktur fortsetzende Überstand der Stützeinrichtung (in der Fahrzeughöhenrichtung) über die Dachstruktur hinaus kann grundsätzlich beliebig gewählt werden, wobei durch einen möglichst hohen Überstand die grundsätzliche strukturelle Schwächung des Wagenkastens durch die Vertiefung reduziert wird. Limitierend ist insoweit lediglich die für die Unterbringung des eingefahrenen Stromabnehmers erforderliche Breite der Vertiefung (d. h. deren Abmessung in der Fahrzeugquerrichtung).

Der Wagenkasten weist bei bevorzugten Varianten der Erfindung in einem in der Fahrzeuglängsrichtung an die Vertiefung angrenzenden Bereich in der Fahrzeughöhenrichtung eine maximale Dachhöhe über dem Grundniveau auf, wobei die Trägeranschlusshöhe dann wenigstens 20% der maximalen Dachhöhe beträgt, insbesondere 20% bis 50% der maximalen Dachhöhe beträgt, vorzugsweise 25% bis 40% der maximalen Dachhöhe beträgt, weiter vorzugsweise 30% bis 35% der maximalen Dachhöhe beträgt. Hiermit lassen sich (insbesondere bei im Dachbereich stark gewölbten Wagenkästen) bei ausreichender Breite der Vertiefung unter Steifigkeitsgesichtspunkten und Schwingungsgesichtspunkten besonders günstige Konfigurationen erzielen.

Zusätzlich oder alternativ kann der Wagenkasten in einem in der Fahrzeuglängsrichtung an die Vertiefung angrenzenden Bereich auf dem Anschlussniveau in der Fahrzeugquerrichtung eine erste Wagenkastenbreite aufweisen, wobei dann die Anschlussbreite wenigstens 80% der ersten Wagenkastenbreite beträgt, insbesondere 80% bis 99% der ersten Wagenkastenbreite beträgt, vorzugsweise 85% bis 97% der ersten Wagenkastenbreite beträgt, weiter vorzugsweise 90% bis 95% der ersten Wagenkastenbreite beträgt. Durch diese besonders weit nach außen verlagerte mechanische Anbindung der Trägereinrichtung (mithin also die besonders hohe Stützbreite für Momente um die Fahrzeuglängsachse) kann eine besonders starke Reduktion der Amplitude der schwingungsanregenden Reaktionskräfte und deren unmittelbare Einleitung in die Seitenwandstruktur erzielt werden.

Zusätzlich oder alternativ kann die Stützeinrichtung einen Wandabschnitt der Seitenwandstruktur bilden, dessen zur Fahrzeuglängsrichtung parallele Wandabschnittsmittenebene im Bereich des Trägeranschlussniveaus zu einer durch das Grundniveau definierten Grundniveauebene um 40° bis 65° geneigt ist, vorzugsweise um 45° bis 60° geneigt ist, weiter vorzugsweise um 50° bis 55° geneigt ist. Hiermit kann typischerweise eine im Wesentlichen vollständige bzw. nahtlose Fortsetzung der Seitenwandstruktur erzielt werden, deren Verlauf (in Fahrzeuglängsrichtung) demjenigen der Seitenwandstruktur außerhalb des Bereichs der Vertiefung entspricht.

Die Stützeinrichtung kann grundsätzlich auf beliebige geeignete Weise gestaltet und/oder mit der Seitenwandstruktur verbunden sein. So ist es bei beispielsweise möglich, dass die Stützeinrichtung aus einer oder mehreren separaten Komponenten gefertigt wird, welche dann mit der Seitenwandstruktur geeignete Weise verbunden werden. Dabei kann es sich beispielsweise um ein Profilelement handeln, welches sich (in der Fahrzeuglängsrichtung) über die gesamte Länge der Vertiefung erstreckt. Ebenso können gegebenenfalls aber natürlich auch nur im Bereich der jeweiligen Anbindungspunkte der Trägereinrichtung entsprechende Stützelemente vorgesehen sein, welche mit der Seitenwandstruktur verbunden sind.

Bei bevorzugten, weil besonders robusten Varianten der Erfindung ist die Stützeinrichtung einstückig mit der Seitenwandstruktur, insbesondere einstückig mit einem Dachlängsträger der Seitenwandstruktur, ausgebildet. Weiterhin ergeben sich besonders günstige Gestaltungen, wenn die Stützeinrichtung nach Art eines Strangpressprofils ausgebildet ist. Dies ist insbesondere dann von Vorteil, wenn auch die Seitenwandstruktur selbst bzw. die an die Stützeinrichtung angrenzenden Teile der Seitenwandstruktur selbst schon als Strangpressprofil ausgebildet sind, da beide Komponenten dann als gemeinsames, einstückiges Bauteil hergestellt werden können.

Es versteht sich, dass die Kontur der Seitenwand im Bereich der Stützeinrichtung gegebenenfalls von der übrigen Kontur der angrenzenden Seitenwand des Wagenkastens abweichen kann. Vorzugsweise ist jedoch vorgesehen, dass die Stützeinrichtung eine in der Fahrzeuglängsrichtung im Wesentlichen prismatische Kontur der Seitenwandstruktur, insbesondere eine im Wesentlichen prismatische Außenkontur der Seitenwandstruktur, im Bereich der Vertiefung in der Fahrzeuglängsrichtung im Wesentlichen fortsetzt. Hiermit lassen sich nicht nur im Hinblick auf die günstige Krafteinleitung in die Seitenwandstruktur vorteilhafte Varianten erzielen. Insbesondere sind derartige Gestaltungen auch im Hinblick auf die aerodynamischen Eigenschaften des Fahrzeugs von Vorteil.

Die Anbindung der Trägereinrichtung an der Stützeinrichtung kann grundsätzlich auf beliebige geeignete Weise erfolgen. Hierbei können einzeln oder beliebiger in Kombination formschlüssige, kraftschlüssige und stoffschlüssige Verbindungen verwendet werden. Vorzugsweise weist die Stützeinrichtung zum Anschluss der Trägereinrichtung einen Trägeranschlussbereich auf, der vorzugsweise wenigstens ein nach Art einer C-Schiene ausgebildetes Anschlusselement aufweist. Hiermit lassen sich auf besonders einfache Weise zuverlässige mechanische Verbindungen zwischen der Trägereinrichtung und der Stützeinrichtung erzielen.

Die Anbindung der Trägereinrichtungen an der Stützeinrichtung kann grundsätzlich aus beliebigen geeigneten Richtungen erfolgen. So kann die Trägereinrichtung beispielsweise in der Fahrzeugquerrichtung von innen her an der Stützeinrichtung angebunden sein. Vorzugsweise weist die Stützeinrichtung einen Trägeranschlussbereich auf, der zum Anschluss der Trägereinrichtung von oben her ausgebildet ist. Hiermit lassen sich auf besonders einfache Weise zu fertigende und zu montierende Konfigurationen erzielen.

Die Höhe der Trägereinrichtung bzw. der darauf abgestützten Stromabnehmereinrichtung über dem Niveau der Dachstruktur kann grundsätzlich beliebig gewählt sein, wobei trotz des Überstands der Stützeinrichtung über dem Niveau der Dachstruktur bevorzugt ein möglichst niedrig bauende Anordnung gewählt wird, bei welcher die Stromabnehmereinrichtung in möglichst geringem Abstand über der Dachstruktur angeordnet ist. Dies ist unter aerodynamischen Gesichtspunkten insoweit von Vorteil, als die Stromabnehmereinrichtung dann gegebenenfalls vollständig innerhalb der prismatischen Kontur des Wagenkastens liegen kann.

Typischerweise ist die Stromabnehmereinrichtung in wenigstens einem Stromabnehmeranschlussbereich auf der Trägereinrichtung abgestützt, wobei der Stromabnehmeranschlussbereich in der Fahrzeughöhenrichtung auf einem mittleren Stromabnehmeranschlussniveau in einer Stromabnehmeranschlusshöhe über einem Grundniveau liegt, welches eine Oberseite der Dachstruktur am Grund der Vertiefung definiert.

Der Wagenkasten weist in einem in der Fahrzeuglängsrichtung an die Vertiefung angrenzenden Bereich in der Fahrzeughöhenrichtung typischerweise eine maximale Dachhöhe über dem Grundniveau auf, wobei die Stromabnehmeranschlusshöhe dann bevorzugt höchstens 50% der maximalen Dachhöhe beträgt, insbesondere 10% bis 50% der maximalen Dachhöhe beträgt, vorzugsweise 20% bis 40% der maximalen Dachhöhe beträgt, weiter vorzugsweise 25% bis 35% der maximalen Dachhöhe beträgt. Hiermit lassen sich besonders vorteilhafte, kompakt bzw. niedrig bauende Gestaltungen erzielen, bei denen die Stromabnehmereinrichtung vorteilhaft nahe an der Dachstruktur angeordnet ist.

Weiterhin weist die Stützeinrichtung zum Anschluss der Trägereinrichtung typischerweise einen Trägeranschlussbereich auf, der in der Fahrzeughöhenrichtung auf einem Trägeranschlussniveau über dem Grundniveau liegt, während die Trägereinrichtung in der Fahrzeughöhenrichtung eine Trägermittenebene definiert. Die Trägermittenebene liegt bei bevorzugten, weil kompakte bzw. niedrig bauenden Varianten der Erfindung unterhalb des Trägeranschlussniveaus.

Die Trägereinrichtung kann an mehreren Stellen, gegebenenfalls sogar durchgängig, mit der Stützeinrichtung bzw. der Seitenwandstruktur verbunden sein. Mithin können also insbesondere in der Fahrzeugquerrichtung mehr als zwei Verbindungspunkte mit der Stützeinrichtung bzw. der Seitenwandstruktur vorgesehen sein. Bei weiteren Varianten der Erfindung ist außerhalb des Wagenkastenanschlussbereichs in der Fahrzeughöhenrichtung ein erster Spalt zwischen der Trägereinrichtung und der Dachstruktur ausgebildet. Hierdurch wird eine unmittelbare mechanische Anregung der Dachstruktur außerhalb des jeweiligen Wagenkastenanschlussbereichs verhindert.

Grundsätzlich kann der erste Spalt beliebig groß gewählt werden, wobei die Spalthöhe in der Fahrzeughöhenrichtung vorzugsweise so gewählt ist, dass unter sämtlichen im Normalbetrieb zu erwartenden Lasten (und daraus resultierenden Deformationen der Trägereinrichtung) kein Kontakt zwischen der Trägereinrichtung und der Dachstruktur in diesem Bereich auftritt. Bevorzugt weist der erste Spalt in der Fahrzeughöhenrichtung eine erste Spalthöhe auf, die 2 mm bis 20 mm, vorzugsweise 5 mm bis 15 mm beträgt, weiter vorzugsweise 8 mm bis 12 mm, beträgt. Hiermit lassen sich in vorteilhafter Weise vergleichsweise niedrig bauende Konfigurationen erzielen.

Der erste Spalt kann grundsätzlich eine beliebige Abmessung in der Fahrzeugquerrichtung aufweisen. Bevorzugt weist der erste Spalt in der Fahrzeugquerrichtung eine erste Spaltbreite auf, die 40% bis 98%, vorzugsweise 60% bis 98%, weiter vorzugsweise 80% bis 98%, einer maximalen Querabmessung der Trägereinrichtung in der Fahrzeugquerrichtung beträgt.

Der erste Spalt kann grundsätzlich ganz oder teilweise mit einem oder mehreren Vibrationen dämmenden und/oder dämpfenden Materialien bzw. Elementen ausgefüllt sein. Vorzugsweise ist der erste Spalt als Luftspalt ausgebildet, da sich hiermit besonders einfach zu realisierende Konfigurationen ergeben.

Die Trägereinrichtung kann grundsätzlich auf beliebige geeignete Weise gestaltet sein, sofern sie eine ausreichende Steifigkeit und Festigkeit zur Abstützung der Lasten der Stromabnehmereinrichtung aufweist. Vorzugsweise umfasst die Trägereinrichtung wenigstens einen Trägerrahmen, der einen Wagenkastenanschlussbereich und einen Stromabnehmeranschlussbereich ausbildet, da hiermit besonders leichte aber dennoch ausreichend steife Gestaltungen erzielt werden können.

Der Trägerrahmen kann grundsätzlich beliebige Gestaltung aufweisen. Bei bevorzugten, weil einfach zu realisierenden Varianten ist der Trägerrahmen im Wesentlichen leiterförmig ausgebildet.

Bei besonders einfach gestalteten Ausführungsformen weist der Trägerrahmen in der Fahrzeugquerrichtung zwei seitliche Enden auf, an denen jeweils ein Wagenkastenanschlussbereich ausgebildet ist. Bevorzugt bildet der Trägerrahmen in der Fahrzeugquerrichtung in einem Mittenbereich den Stromabnehmeranschlussbereich aus.

Der Trägerrahmen kann grundsätzlich aus beliebigen geeigneten Komponenten aufgebaut sein, zum Beispiel aus einem oder mehreren plattenförmigen Elementen gestaltet sein. Vorzugsweise umfasst der Trägerrahmen eine Mehrzahl von Profilelementen, insbesondere Hohlprofilelemente, da hiermit besonders leicht bauende und steife Gestaltungen erzielt werden können.

Der Trägerrahmen kann bei besonders günstigen, weil einfach und robust gestalteten Varianten wenigstens zwei, vorzugsweise wenigstens drei, in der Fahrzeugquerrichtung verlaufende Profilelemente umfassen, an deren Ende jeweils ein Wagenkastenanschlussbereich ausgebildet ist.

Auch die Anbindung des Trägerrahmens an der Stützeinrichtung kann grundsätzlich auf beliebige geeignete Weise erfolgen. Bei besonders einfach gestalteten Varianten, welche insbesondere eine besonders niedrig bauende Gestaltung ermöglichen, umfasst der Trägerrahmen wenigstens ein nach Art einer Winkelplatte ausgebildetes Anschlusselement, welches einen Teil des Wagenkastenanschlussbereichs ausbildet.

Für den Trägerrahmen können grundsätzlich beliebige geeignete Materialien verwendet werden. Insbesondere kann für den Trägerrahmen ein Material verwendet werden, welches dem Material der Dachstruktur entspricht oder ähnelt. Somit wird die Gefahr einer so genannten elektrolytischen Korrosion verringert. So kann beispielsweise ein Material verwendet werden, das Aluminium umfasst, wodurch eine besonders leichte und steife Gestaltung erzielt wird. Besonders günstige Eigenschaften hinsichtlich der Schwingungsreduzierung ergeben sich weiterhin bei Varianten, bei denen der Trägerrahmen aus wenigstens einem Material aufgebaut ist, das Stahl umfasst.

Die Trägereinrichtung kann grundsätzlich als im Wesentlichen starres Bauteil gestaltet sein. Vorzugsweise umfasst die Trägereinrichtung jedoch wenigstens ein Schwingungsdämpfungselement bzw. Schwingungsreduktionselement, welches dazu ausgebildet ist, einen von der Stromabnehmereinrichtung induzierten Eintrag von Schwingungen in die Dachstruktur zu reduzieren.

Das wenigstens eine Schwingungsreduktionselement kann hierbei nach Art eines Dämpfungselements und/oder eines Dämmungselements und/oder einer so genannten Blockiermasse gestaltet sein, welches bzw. welche das Schwingungsverhalten der Trägereinrichtung (insbesondere deren Eigenfrequenzen und/oder Eigenformen und/oder Amplituden der Eigenformen) entsprechend modifiziert, um den Eintrag von Schwingungen in die Dachstruktur in den relevanten Frequenzbereichen zu reduzieren. Hierzu kann das Schwingungsreduktionselement außerhalb des unmittelbaren Kraftflusses zwischen der Stromabnehmereinrichtung und der Struktur des Wagenkastens an der Trägereinrichtung angeordnet sein und beispielsweise lediglich dämpfend und/oder dämmend und/oder das Schwingungsverhalten modifizierend auf die (zu Schwingungen angeregte) Trägereinrichtung wirken.

Bei bevorzugten Varianten der Erfindung kann das wenigstens eine Schwingungsreduktionselement als technischer Dämpfer gestaltet sein. Dieser kann ausschließlich zur Dämpfung von Schwingungen über einen breiten Frequenzbereich ausgelegt bzw. optimiert sein, da über den Dämpfer keine statischen Kräfte zu übertragen sind. Hierbei ist es insbesondere möglich, den Dämpfer für den Bereich besonders störender, typischerweise tiefer Frequenzen auszulegen.

Der wenigstens eine Dämpfer wirkt bevorzugt zwischen dem Massenschwerpunkt der Stromabnehmeranordnung und dem Wagenkasten. Hierbei kann eine Anordnung gewählt sein, bei welcher der wenigstens eine Dämpfer auf kürzest möglichem Weg, beispielsweise senkrecht zur Dachstruktur, mit dem Wagenkasten bzw. der Dachstruktur verbunden ist. Ebenso kann aber auch eine anderweitige Ausrichtung bzw. Wirkrichtung vorgesehen sein. Weiterhin versteht es sich, dass eine Kombination aus zwei oder mehreren, parallel und/oder geneigt zueinander angeordneten bzw. wirkenden Dämpfern vorgesehen sein kann. Diese können dann insbesondere richtungsabhängig unterschiedliche Dämpfungswirkung entfalten, welche auf die spezifischen Anforderungen des konkreten Fahrzeugs abgestimmt ist.

Besonders vorteilhaft ist es, wenn ein solches Schwingungsreduktionselement im Trägeranschlussbereich der Trägereinrichtung an der Stützeinrichtung angeordnet ist, da an dieser Krafteinleitungsstelle in die Trägereinrichtung in der Regel besonders hohe (typischerweise maximale) Schwingungsamplituden zu erwarten sind und das Schwingungsreduktionselement dort eine besonders gute Dämpfungswirkung bzw. Modifikationswirkung entfalten kann.

Zusätzlich oder alternativ kann das wenigstens eine Schwingungsreduktionselement in einen Kraftfluss zwischen der Stromabnehmereinrichtung und der Dachstruktur des Wagenkastens geschaltet sein. Bei bestimmten Varianten der Erfindung ist das Schwingungsreduktionselement im Dachanschlussbereich angeordnet. Zusätzlich oder alternativ kann ein Schwingungsreduktionselement im Stromabnehmeranschlussbereich angeordnet sein.

Das Schwingungsreduktionselement kann grundsätzlich auf beliebige geeignete Weise aus einem oder mehreren Materialien aufgebaut sein, um die gewünschte dämpfende Wirkung und/oder dämmende Wirkung und/oder das Schwingungsverhalten modifizierende Wirkung zu erzielen. Vorzugsweise ist das Schwingungsreduktionselement aus wenigstens einem Material aufgebaut, das einen Kunststoff, insbesondere Gummi, umfasst.

Bei weiteren Varianten des erfindungsgemäßen Schienenfahrzeugs ist eine Abschirmeinrichtung für von der Stromabnehmereinrichtung induzierten Luftschall, wobei die Abschirmeinrichtung zwischen der Stromabnehmereinrichtung und der Dachstruktur des Wagenkastens angeordnet ist. Hierbei kann die Abschirmeinrichtung insbesondere zwischen der Trägereinrichtung und der Dachstruktur angeordnet sein. Vorzugsweise ragt die Abschirmeinrichtung in der Fahrzeugquerrichtung und/oder der Fahrzeuglängsrichtung über die Isolatoreinrichtung hinaus, um eine möglichst großflächige Abschirmung der Dachstruktur gegen den Luftschall zu erzielen.

Das Frequenzspektrum, in dem eine wirksame Geräuschreduktion erzeugt wird, kann in vorteilhafter Weise auf die im Innenraum als störend empfundenen Frequenzen und den jeweils im Innenraum generierten Schalldruck abgestimmt werden. So können Frequenzen, die im Innenraum zu erheblichen Resonanzen und damit zu einem hohen Schalldruck führen, gezielt reduziert bzw. gedämpft werden. Mithin wird also bevorzugt wenigstens eine mit der vorliegenden Erfindung gedämpfte Frequenz in Abhängigkeit von der Gestaltung des Wagenkastens, insbesondere der Struktur des Wagenkastens, gewählt. Dies lässt sich insbesondere durch eine geeignete Wahl der Dämpfungseigenschaften und/oder Anordnung und/oder Gestaltung der Komponenten, insbesondere der Abschirmeinrichtung, insbesondere einzelner dämpfender Abschnitte, erzielen.

Vorzugsweise ist insbesondere die Abschirmungseinrichtung dazu ausgebildet, einen von der Stromabnehmereinrichtung induzierten Eintrag von Schwingungen in einem Frequenzbereich von 10 Hz bis 1200 Hz, vorzugsweise von 20 Hz bis 1000 Hz, weiter vorzugsweise von 100 Hz bis 800 Hz, zu dämpfen, da hiermit, insbesondere im Hochgeschwindigkeitsverkehr oberhalb von 250 km/h, eine besonders wirkungsvolle Geräuschreduktion erzielt werden kann.

Die Abschirmeinrichtung kann grundsätzlich auf beliebige geeignete Weise an einem oder mehreren Punkten mit der Dachstruktur verbunden sein. Vorzugsweise ist die Abschirmeinrichtung über eine Mehrzahl von Schwingungsentkopplungselementen auf der Dachstruktur abgestützt. Dies ist insbesondere bei Fahrzeugen für den Hochgeschwindigkeitsverkehr von Vorteil, bei denen im Betrieb zum Teil erhebliche singuläre Druckschwankungen bzw. Druckspitzen (z. B. bei Zugbegegnungen, Tunneleinfahrten etc.) auftreten. Die schwingungsentkoppelte Abstützung sichert die Abschirmeinrichtung in vorteilhafter Weise gegen übermäßige Deformation bei solchen singulären Druckereignissen, ohne die Abschirmeigenschaften gegen den von der Stromabnehmereinrichtung induzierten Luftschall erheblich zu beeinträchtigen.

Die Eigenfrequenz der Abschirmeinrichtung ist ebenso wie die Eigenfrequenz der Schwingungsentkopplungselemente bevorzugt möglichst weitgehend auf das zu erwartende Frequenzspektrum des von der Stromabnehmereinrichtung induzierten Luftschalls abgestimmt, um eine gute Abschirmwirkung zu erzielen. So ist die Abschirmeinrichtung insbesondere so gestaltet, dass sie in einem Frequenzbereich von 20 Hz bis 800 Hz ein gutes Dämpfungsverhalten, insbesondere keine ausgeprägten Eigenfrequenzen, aufweist.

Die Abschirmeinrichtung kann grundsätzlich auf beliebige geeignete Weise aus einer oder mehreren Komponenten aufgebaut sein. Sie umfasst bevorzugt ein im Wesentlichen plattenförmiges, insbesondere im Wesentlichen ebenes, Abschirmelement, welches einer Oberseite der Dachstruktur unter Ausbildung eines zweiten Spalts zugeordnet ist. Der zweite Spalt gewährleistet hierbei unter anderem, dass sich das Abschirmelement möglichst frei deformieren kann, sodass es neben der Reflektion der Schallwellen auch einen Teil der Schallenergie aufnehmen und durch die daraus resultierende Deformation zumindest einen Teil in Form von innerer Reibung dissipieren kann.

Der zweite Spalt kann hierzu grundsätzlich beliebige geeignete Abmessungen haben, die insbesondere auf die Schwingungseigenschaften der Abschirmeinrichtung abgestimmt sind, um die beschriebene Energiedissipation zu ermöglichen. Prinzipiell sollte der zweite Spalt so groß wie möglich gewählt werden, um im Bereich tiefer Frequenzen eine möglichst hohe Schalldämmung erzielen zu können. Bevorzugt weist der zweite Spalt in der Fahrzeughöhenrichtung eine zweite Spalthöhe auf, die 40 mm bis 120 mm, vorzugsweise 60 mm bis 100 mm, weiter vorzugsweise 70 mm bis 90 mm, beträgt.

Der zweite Spalt kann (wie schon der erste Spalt) grundsätzlich ganz oder teilweise mit einem oder mehreren Vibrationen dämmenden bzw. dämpfenden Materialien ausgefüllt sein, um mögliche Resonanzen im zweiten Spalt zu unterdrücken. Beispielsweise kann es sich bei dem Vibrationen dämmenden bzw. dämpfenden Material um Mineralwolle, mikroperforierte Paneele, so genannte Akustikpaneele, eine so genannte Schwerschicht, beispielsweise aus Ethylen-Propylen-Dien-Kautschuk bzw. Ethylen-Propylen-Dien-Monomer (EPDM) oder dergleichen handeln. Bei weiteren Varianten der Erfindung ist der zweite Spalt als Luftspalt ausgebildet, da sich hiermit besonders einfach zu realisierende Konfigurationen ergeben.

Die Abschirmeinrichtung kann grundsätzlich nur aus einem plattenförmigen Abschirmelement aufgebaut sein. Vorzugsweise ist das Abschirmelement jedoch mit entsprechenden mechanischen Verstärkungseinrichtungen versehen, um seine Formstabilität im Betrieb zu erhöhen. Als Verstärkungseinrichtungen können grundsätzlich beliebige geeignete Elemente, wie beispielsweise Rippen, Rinnen, Sicken etc. in beliebiger geeigneter Anordnung vorgesehen sein. Besonders robuste Gestaltungen ergeben sich, wenn die Abschirmeinrichtung im Wesentlichen wannenförmig mit einem umlaufend an das Abschirmelement angrenzenden, insbesondere in der Fahrzeughöhenrichtung nach oben weisenden, Randbereich ausgebildet ist.

Für das Abschirmelement können grundsätzlich beliebige geeignete Materialien verwendet werden. Insbesondere kann für das Abschirmelement ein Material verwendet werden, welches dem Material der Dachstruktur entspricht oder ähnelt. Besonders günstige Eigenschaften hinsichtlich der Schwingungsreduzierung ergeben sich bei Varianten, bei denen das Abschirmelement aus wenigstens einem Material aufgebaut ist, das Stahl umfasst.

Die Vertiefung ist bevorzugt zumindest abschnittsweise, insbesondere aber umlaufend, in der Fahrzeuglängsrichtung und/oder der Fahrzeugquerrichtung durch eine Begrenzung, insbesondere eine Begrenzungswand, begrenzt. Bevorzugt ist in diesen Fällen vorgesehen, dass die Abschirmeinrichtung zumindest abschnittsweise, vorzugsweise umlaufend, an die Begrenzung unter Ausbildung eines schmalen dritten Spaltes heranreicht, dessen Spaltbreite (minimaler Abstand zwischen Abschirmeinrichtung und Begrenzung) 2 mm bis 20 mm, vorzugsweise 5 mm bis 15 mm, weiter vorzugsweise 8 mm bis 12 mm, beträgt. Hierdurch ist in vorteilhafter Weise sichergestellt, dass die darunterliegende Dachstruktur zumindest in diesem Bereich mit dem schmalen Spalt im Wesentlichen vollständig durch die Abschirmeinrichtung abgeschirmt ist.

Bei bevorzugten Varianten des erfindungsgemäßen Schienenfahrzeugs ist die Begrenzung der Vertiefung in einem Randbereich der Vertiefung am Übergang zu einer Außenhaut des Wagenkastens in wenigstens einem gefasten Abschnitt nach Art einer Fase abgewinkelt ausgebildet, um an der Außenhaut eine definierte Strömungsabrisskante für eine die Außenhaut des Wagenkastens überstreichende Luftströmung auszubilden

Der Randbereich der Vertiefung weist bevorzugt einen vorderen Abschnitt und einen hinteren Abschnitt auf, die sich jeweils zumindest teilweise in der Fahrzeugquerrichtung zwischen zwei seitlichen Abschnitten erstrecken, die sich jeweils in der Fahrzeuglängsrichtung erstrecken. Der wenigstens eine gefaste Abschnitt erstreckt sich bevorzugt zumindest über 75%, vorzugsweise zumindest über 90%, weiter vorzugsweise über im Wesentlichen 100%, des vorderen Abschnitts und/oder des hinteren Abschnitts.

Durch diese abgewinkelte Gestaltung der Oberfläche im Nachlauf der Strömungsabrisskante kann zum einen in vorteilhafter Weise eine ausgeprägte scharfe Strömungsabrisskante erzielt werden, welche eine saubere, definierte Ablösung der Strömung von der Oberfläche gewährleistet. Dies ist im Hinblick auf eine geringe Aufweitung der sich in der abgelösten Strömung ausbildenden Scherschicht (in einer Richtung senkrecht zur Haupterstreckungsebene der Scherschicht) und damit einen geringen Strömungswiderstand des Fahrzeugs von Vorteil.

Ein weiterer Vorteil dieser abgewinkelten Gestaltung in liegt darin, dass bei Fahrt in einer umgekehrten Fahrtrichtung eine dann aus Richtung des gegenüberliegenden Randbereichs kommende Scherschicht nicht wie bei den herkömmlichen Gestaltungen auf eine im Wesentlichen senkrecht zur Auftreffrichtung ausgerichtete Oberfläche auftrifft, sondern auf die entsprechend weniger stark zur Auftreffrichtung geneigte Oberfläche der Fase auftrifft. Dies hat den Vorteil, dass in die auftreffende Scherschicht ein geringerer Impuls eingeleitet wird, sodass sich die Strömung schneller wieder an die Oberfläche anlegen und dort eine widerstandsarme Grenzschicht ausbilden kann.

Je nach Größe des Neigungswinkels zwischen der Oberfläche der Außenhaut des Wagenkastens und der Oberfläche der Fase kann es zwar beim Überströmen der Strömungsabrisskante (welches bei dieser umgekehrten Fahrtrichtung dann in umgekehrter Richtung von der Fase zur Außenhaut hin erfolgt) zu einer erneuten lokalen bzw. temporären Ablösung (in Form einer so genannten Ablöseblase) kommen, diese fällt jedoch wegen der günstigeren Neigung zwischen Außenhaut und Fase geringer als bei den herkömmlichen Gestaltungen aus. Mit anderen Worten wird mit der vorliegenden Erfindung der Aufprallwinkel der Scherschicht auf die Oberfläche reduziert, sodass es zu einem sanfteren Aufprall der Scherschicht auf die Oberfläche der Fase kommt, der ein schnelles Anlegen der Strömung an die Oberfläche begünstigt und so eine Reduktion des Strömungswiderstands mit sich bringt. Ein weiterer Vorteil dieses sanfteren Aufpralls der Scherschicht auf die Oberfläche liegt in der geringeren Schallemission, die damit einhergeht.

Die Stromabnehmereinrichtung kann grundsätzlich beliebig tief in der durch die Außenhaut des Wagenkastens definierten Hüllfläche versenkt sein. Limitierend ist hier lediglich die erforderliche Deckenhöhe im Innenraum des Fahrzeugs. Bei bevorzugten Varianten des erfindungsgemäßen Schienenfahrzeugs weist die Stromabnehmereinrichtung eine in die Vertiefung eingefahrene Ruheposition auf, wobei die Stromabnehmereinrichtung eine durch die Außenhaut des Wagenkastens definierte Hüllfläche in der Ruheposition in der Fahrzeughöhenrichtung um höchstens 90 mm, vorzugsweise höchstens 70 mm, weiter vorzugsweise höchstens 50 mm, überragt.

Besonders vorteilhaft ist es natürlich, wenn Dank der mit der vorliegenden Erfindung möglichen kompakten Gestaltung die Stromabnehmereinrichtung eine durch die Außenhaut des Wagenkastens definierte Hüllfläche in der Ruheposition in der Fahrzeughöhenrichtung im Wesentlichen nicht überragt.

Hierdurch werden aerodynamisch besonders günstige Konfigurationen erzielt. Insbesondere erübrigen sich hierbei auf die Außenhaut des Wagenkastens aufgesetzte Verkleidungen oder Hutzen, welche letztlich trotz aller aerodynamisch optimierter Gestaltung den Strömungswiderstand des Fahrzeugs erhöhen. So kann beispielsweise bei einem Triebzug im Hochgeschwindigkeitsverkehr bei einer Geschwindigkeit von 380 km/h im Vergleich zu einem herkömmlichen Dachaufbau mit aufgesetzten Verkleidungen eine wesentliche Einsparung von etwa 2% bis 5%, typischerweise etwa 3%, der benötigten Gesamtantriebsleistung erzielt werden.

Die Vertiefung kann (in der Draufsicht von oben auf das Dach des Wagenkastens) grundsätzlich eine beliebige Außenkontur aufweisen, so kann sie beispielsweise als einfacher rechteckiger Dachausschnitt mit im Wesentlichen rechteckiger Außenkontur gestaltet sein. Bevorzugt folgt die Außenkontur der Vertiefung im Wesentlichen der Geometrie bzw. Außenkontur der in ihre Ruheposition eingefahrenen Stromabnehmereinrichtung, sodass durch Vertiefung eine möglichst geringe (gegebenenfalls zu Schallemissionen führende) Störung in die Luftströmung eingebracht wird, welche das Dach des Wagenkastens überstreicht.

Die Stromabnehmereinrichtung grundsätzlich auf beliebige geeignete Weise gestaltet sein, wobei die Stromabnehmereinrichtung typischerweise eine elektrische Isolation zur Potenzialtrennung eines auf Hochspannungsniveau liegenden Teils der Stromabnehmereinrichtung gegenüber der Trägereinrichtung aufweist. Dabei kann sie grundsätzlich in herkömmlicher Weise über entsprechende Isolatoren auf der Trägereinrichtungen abgestützt sein. Bevorzugt ist jedoch vorgesehen, dass die Stromabnehmereinrichtung wenigstens einen an der Trägereinrichtung angelenkten ersten Schwenkarm aufweist, der eine Isolatoreinrichtung zur Potenzialtrennung umfasst. Hierdurch lassen sich besonders flach bauende Konfigurationen erzielen, bei denen die Stromabnehmereinrichtung im abgesenkten Zustand auch in Vertiefungen vergleichsweise geringer Tiefe vollständig innerhalb der prismatischen Außenkontur des Wagenkastens liegt, was insbesondere natürlich unter aerodynamischen Gesichtspunkten von Vorteil ist.

Bei besonders einfach und kompakt gestalteten Varianten kann die Stromabnehmereinrichtung insbesondere nach Art eines Halbscherenstromabnehmers ausgebildet sein, dessen an der Trägereinrichtung angelenkte Komponenten mit einer Isolatoreinrichtung zur Potenzialtrennung versehen sind.

Bei dem Schienenfahrzeug kann es sich grundsätzlich um ein beliebiges Fahrzeug mit beliebiger Nennbetriebsgeschwindigkeit handeln. Vorzugsweise ist es jedoch für den Hochgeschwindigkeitsverkehr mit einer Nennbetriebsgeschwindigkeit oberhalb von 250 km/h, insbesondere oberhalb von 300 km/h, insbesondere von 320 km/h bis 390 km/h, ausgebildet, da hierbei die Vorteile der Erfindung besonders stark zum Tragen kommen.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigen:

### KURZE BESCHREIBUNG DER FIGUREN

- Figur 1: eine schematische, teilweise geschnittene Seitenansicht eines Teils einer bevorzugten Ausführungsform des erfindungsgemäßen Fahrzeugs mit einer bevorzugten Ausführungsform der erfindungsgemäßen Stromabnehmeranordnung;
- Figur 2: eine schematische perspektivische Ansicht eines Teils des Fahrzeugs aus Figur 1 in einem montierten Zustand;
- Figur 3: eine schematische Schnittansicht des Teils des Fahrzeugs aus Figur 2 entlang Linie III-III;
- Figur 4: eine schematische perspektivische Ansicht einer Luftschallreduktionseinrichtung, welche bei dem Fahrzeug aus Figur 1 verwendet wird;
- Figur 5: eine schematische Schnittansicht eines Teils des Fahrzeugs entlang der Linie V-V aus Figur 2.

### DETAILLIERTE BESCHREIBUNG DER ERFINDUNG

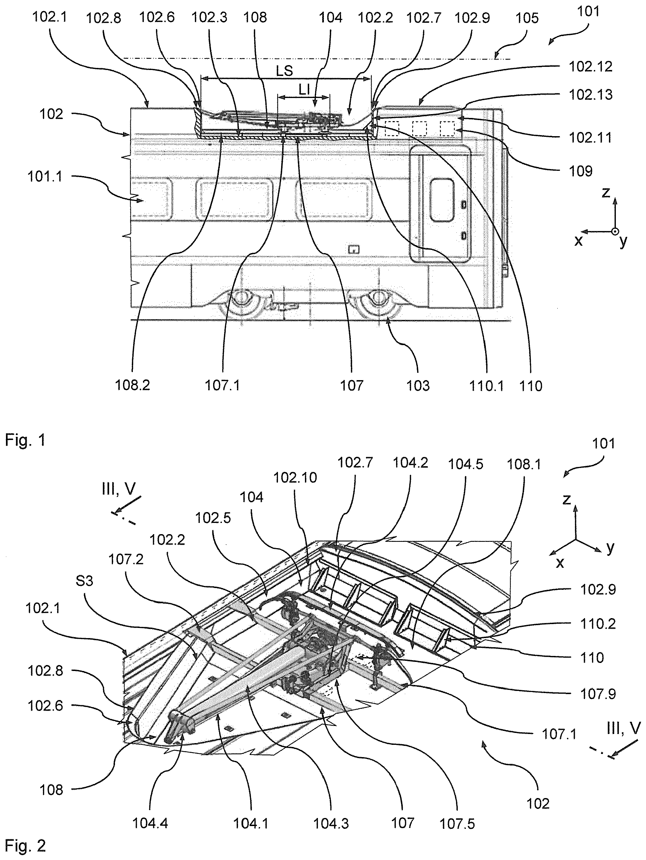

Im Folgenden wird unter Bezugnahme auf die Figuren 1 bis 5 ein bevorzugtes Ausführungsbeispiel des erfindungsgemäßen Fahrzeugs in Form eines Schienenfahrzeugs 101 beschrieben. Bei dem Schienenfahrzeug 101 handelt es sich um einen Wagen eines Triebzugs für den Hochgeschwindigkeitsverkehr, dessen Nennbetriebsgeschwindigkeit oberhalb von 250 km/h, nämlich bei vₙ = 380 km/h, liegt.

Es sei an dieser Stelle angemerkt, dass die nachfolgenden Ausführungen für einen Strömungszustand bei Fahrt des Fahrzeugs 101 mit konstanter Geschwindigkeit im geraden ebenen Gleis ohne die Einflüsse von Seitenwind oder dergleichen gemacht werden, sofern keine expliziten anderweitigen Angaben gemacht werden. Es versteht sich, dass sich bei einer Abweichung von diesem Betriebszustand (beispielsweise infolge einer Kurvenfahrt oder von Seitenwind etc.) Abweichungen von den beschriebenen Strömungsverhältnissen, insbesondere den Strömungsrichtungen ergeben können, wobei jedoch die grundsätzlichen Feststellungen im Wesentlichen weiterhin gelten.

Das Fahrzeug 101 umfasst einen Wagenkasten 102, der eine Außenhaut 102.1 des Fahrzeugs 101 definiert. Der Wagenkasten 102 ist im Bereich seiner beiden Enden in herkömmlicher Weise jeweils auf einem Fahrwerk in Form eines Drehgestells 103 abgestützt ist. Es versteht sich jedoch, dass die vorliegende Erfindung auch in Verbindung mit anderen Konfigurationen eingesetzt werden kann, bei denen der Wagenkasten lediglich auf einem Fahrwerk abgestützt ist.

Zum einfacheren Verständnis der nachfolgenden Erläuterungen ist in den Figuren ein (durch die Radaufstandsebene des Drehgestells 103 vorgegebenes) Fahrzeug-Koordinatensystem x,y,z angegeben, in dem die x-Koordinate die Längsrichtung des Schienenfahrzeugs 101, die y-Koordinate die Querrichtung des Schienenfahrzeugs 101 und die z-Koordinate die Höhenrichtung des Schienenfahrzeugs 101 bezeichnen.

Im vorliegenden Beispiel ist das Fahrzeug 101 im Hinblick auf die beschriebenen Komponenten im Wesentlichen spiegelsymmetrisch zu einer Mittenlängsebene des Wagenkastens 102 ausgebildet. Es versteht sich jedoch, dass bei anderen Varianten der Erfindung zumindest für einzelne der nachfolgend beschriebenen Komponenten auch eine von einer solchen Symmetrie abweichende Gestaltung gewählt sein kann.

Der Wagenkasten 102 weist in dem dargestellten Abschnitt (abgesehen von lokalen Ausnehmungen oder Anbauten für funktionale Komponenten des Fahrzeugs, wie beispielsweise Stromabnehmer, Dachcontainer etc.) eine im Wesentlichen prismatische Gestaltung mit entlang der Fahrzeuglängsrichtung im Wesentlichen identischen Schnittkonturen der Außenhaut auf.

Im Bereich einer solchen Ausnehmung, die in Form einer Vertiefung 102.2 im Dachbereich des Wagenkastens 102 ausgebildet ist, ist im vorliegenden Beispiel eine Stromabnehmereinrichtung 104 angeordnet, welche dazu ausgebildet ist, in herkömmlicher Weise in einem (nicht dargestellten) ausgefahrenen Zustand eine Oberleitung 105 zu kontaktieren, um das Fahrzeug 101 mit elektrischer Energie zu versorgen.

Die Stromabnehmereinrichtung 104 ist in herkömmlicher Weise als so genannter Pantograph bzw. Halbscherenstromabnehmer gestaltet, welcher am freien Ende einer Halbscherenmechanik 104.1 eine Schleifleiste 104.2 trägt, welche im aktivierten, ausgefahrenen Zustand der Stromabnehmereinrichtung 104 die auf Hochspannungspotenzial befindlichen Oberleitung 105 kontaktiert. Zur Potenzialtrennung ist die Halbscherenmechanik 104.1 über einen isolierenden Abschnitt des Unterarms 104.3 der Halbscherenmechanik 104.1 sowie einen isolierenden Abschnitt der Lenkerstange 104.4 der Halbscherenmechanik 104.1 gegenüber der Struktur 102.3 des Wagenkastens 102 isoliert, wie dies beispielsweise grundsätzlich aus der DE 10 2008 032 588 B4 bekannt ist.

Die Lage der isolierenden Abschnitte des Unterarms 104.3 und der Lenkerstange 104.4 ist in herkömmlicher Weise so gewählt, dass bei aktivierter bzw. ausgefahrener, die Oberleitung 105 kontaktierender Stromabnehmereinrichtung 104 zwischen den Strom führenden, nicht mit einer elektrischen Isolation versehenen Bauteilen der Stromabnehmereinrichtung 104 und den angrenzenden Teilen des Wagenkastens 102 ein vorgegebener Abstand nicht unterschritten wird, um durch die so geschaffene Luftisolationsstrecke Spannungsüberschläge zu vermeiden.

Um im Betrieb des Fahrzeugs 101 eine möglichst geringe Geräuschimmission in den Innenraum 101.1 des Fahrzeugs zu erzielen, wurden zwischen der Stromabnehmereinrichtung 104 und der Struktur des Wagenkastens 102 gezielte Maßnahmen zur Schwingungsreduktion ergriffen, welche sich auf die Reduktion des durch die Stromabnehmereinrichtung 104 induzierten Eintrags von Schwingungen (in Form von Körperschall bzw. Luftschall) in die Struktur des Wagenkastens 102, insbesondere dessen Dachstruktur 102.3, beziehen.

So ist zur Körperschallreduktion eine über eine Stützeinrichtung 106 am Wagenkasten 102 befestigte Trägereinrichtung 107 vorgesehen, über welche der von der Stromabnehmereinrichtung 104 induzierte Eintrag von Körperschall in die Struktur des Wagenkastens 102, insbesondere die (den Boden der Vertiefung 102.2 bildende) Dachstruktur 102.3, reduziert wird, während eine die Luftschallreduktionseinrichtung 108 dazu ausgebildet ist, einen von der Stromabnehmereinrichtung 104 induzierten Eintrag von Luftschall in die Struktur des Wagenkastens 102, insbesondere die Dachstruktur 102.3, zu reduzieren. Durch beide Maßnahmen lassen sich erhebliche Reduktionen der Schallimmission in den Fahrzeuginnenraum erzielen, wie dies nachfolgend näher beschrieben wird.

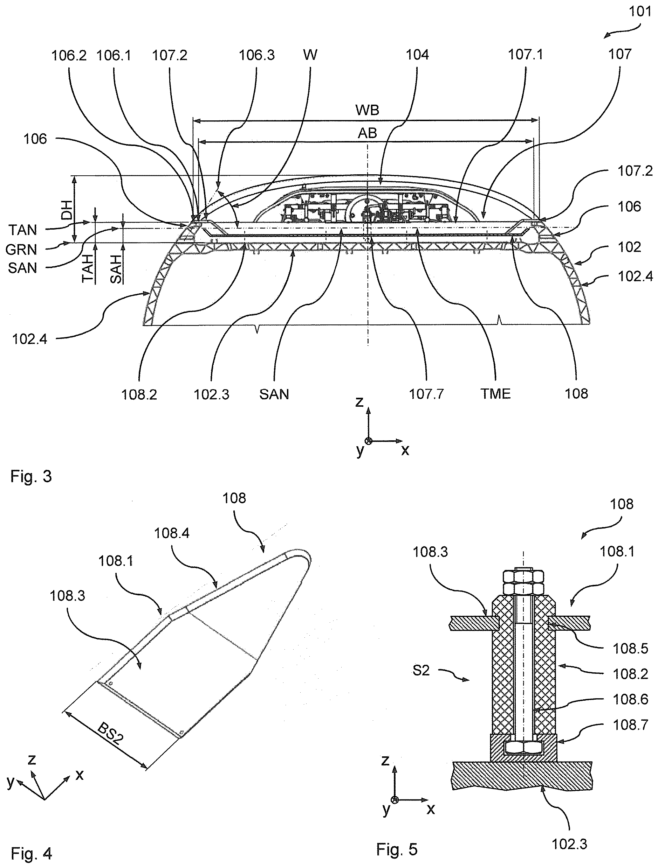

Wie insbesondere der Figur 2 und 3 zu entnehmen ist, umfasst die Trägereinrichtung 107 im vorliegenden Beispiel einen im Wesentlichen leiterförmig gestalteten Trägerrahmen 107.1 für die Stromabnehmereinrichtung 104. Der Trägerrahmen 107.1 weist in der Fahrzeugquerrichtung (y-Richtung) zwei seitliche Enden auf, an denen jeweils ein Wagenkastenanschlussbereich 107.2 ausgebildet ist. In diesem Wagenkastenanschlussbereich 107.2 ist der Trägerrahmen 107.1 jeweils über eine Wagenkastenanschlusseinrichtung 107.3 in Form einer Winkelkonsole 107.4 mit der einer Montageschiene 106.1 der Stützeinrichtung 106 verbunden. Die Stützeinrichtung 106 ist ihrerseits mit der Seitenwandstruktur 102.4 des Wagenkastens 102 verbunden.

Die Montageschienen 106.1 sind im vorliegenden Beispiel in herkömmlicher Weise als so genannte C-Schienen ausgebildet, welche im vorliegenden Beispiel im Wesentlichen starr mit der Stützeinrichtung 106 verbunden sind. Im vorliegenden Beispiel sind die Montageschienen 106.1 direkt in der als Strangpressprofil ausgebildeten Stützeinrichtung 106 ausgeformt. Es versteht sich jedoch, dass Sie bei anderen Varianten der Erfindung über eine beliebige andere kraftschlüssige und/oder formschlüssige und/oder stoffschlüssige Verbindung mit der Stützeinrichtung 106 verbunden sein können. In den Montageschienen 106.1 sind entsprechende Gleitstücke verschieblich angeordnet, über welche die Winkelkonsolen 107.4 des (in der Fahrzeughöhenrichtung) von oben aufgesetzten Trägerrahmens 107.1 (nach entsprechender Justierung) mittels entsprechender Schraubverbindungen, Klemmverbindungen oder dergleichen an der Stützeinrichtung 106 befestigt werden können.

Es versteht sich jedoch, dass bei anderen Varianten auch eine beliebige andere Gestaltung für den Anschluss der Trägereinrichtung 107 an der Stützeinrichtung 106 vorgesehen sein kann. So kann die Trägereinrichtung 107 auch unmittelbar über eine geeignete kraftschlüssige und/oder formschlüssige und/oder stoffschlüssige Verbindung mit der Stützeinrichtung 106 verbunden sein. Insbesondere können mehr als zwei, vorzugsweise wenigstens drei, in der Fahrzeugquerrichtung verlaufende Profilelemente vorgesehen sein, an deren Ende jeweils ein Wagenkastenanschlussbereich ausgebildet ist.

Wie insbesondere der Figur 3 zu entnehmen ist, handelt es sich bei der Stützeinrichtung 106 um einen einstückig mit der Seitenwandstruktur 102.4 ausgebildeten Teil der Seitenwandstruktur 102.4, welcher den ausgeprägt in der Fahrzeughöhenrichtung ausgerichteten Verlauf der Seitenwandstruktur 102.4 im Wesentlichen fortsetzt, wobei er die abgewinkelt zur Seitenwandstruktur 102.4 (im Wesentlichen in der Fahrzeugquerrichtung bzw. senkrecht zur Fahrzeughöhenrichtung verlaufende) Dachstruktur 102.3 in der Fahrzeughöhenrichtung überragt.

Die Stützeinrichtung 106 ist dabei als integrale Komponente eines als Strangpressprofil ausgebildeten Dachlängsträgers der Seitenwandstruktur 102.4 ausgebildet, welche sich (in der Fahrzeuglängsrichtung) über die gesamte Länge der Vertiefung 102.2 erstreckt.

Es versteht sich hierbei, dass grundsätzlich vorgesehen sein kann, dass die gesamte prismatische Struktur des Wagenkastens 102 als ein einziges Strangpressprofil gestaltet sein kann. Typischerweise wird die Struktur des Wagenkastens 102 aus mehreren derartiger Strangpressprofile zusammengesetzt. Es versteht sich jedoch, dass bei anderen Varianten der Erfindung auch eine beliebige andere Bauweise für die Struktur des Wagenkastens 102 gewählt sein kann. Insbesondere kann die Struktur des Wagenkastens 102 in so genannter Differenzialbauweise aus mehreren strukturellen Stützelementen (wie Spanten, Streben und Trägern etc.) und darauf separat aufgebrachten Decklagen (Außenhautbleche, Innenverkleidungen etc.) aufgebaut sein

Diese Abstützung der Trägereinrichtung 107 und der darauf montierten Stromabnehmereinrichtung 104 über die die Seitenwandstruktur 102.4 fortsetzende Stützeinrichtung 106 hat den Vorteil, dass die Einleitung der strukturgebundenen Schwingungsenergie (welche aus den an der Stromabnehmereinrichtung 104 im Betrieb wirkenden Lasten resultiert) unter Umgehung der im Wesentlichen horizontal bzw. senkrecht zur Fahrzeughöhenrichtung verlaufenden Dachstruktur 102.3 im Wesentlichen unmittelbar über bzw. in die Seitenwandstruktur 102.4 des Wagenkastens 102 erfolgt.

Hierdurch wird zum einen eine vorteilhaft große Stützbreite AB bei der Abstützung der Stromabnehmereinrichtung 104 erzielt, sodass beispielsweise bei der Abstützung von Drehmomenten um die Fahrzeuglängsachse (x-Achse) geringere, die Struktur des Wagenkastens 102 anregende Stützkräfte und damit letztlich geringere Schwingungsamplituden erzielt werden.

Zudem greifen diese Stützkräfte im Bereich der primär in der Fahrzeughöhenrichtung verlaufenden Seitenwandstruktur 102.4 des Wagenkastens 102 an. Hierdurch wird eine Gestaltung vermieden (wie sie beispielsweise aus der FR 2 880 604 A1 bekannt ist), bei welcher die Kraftangriffspunkte der Stützkräfte in dem primär horizontal bzw. senkrecht zur Fahrzeughöhenrichtung ausgerichteten Bereich der Dachstruktur angreifen.

Hierdurch wird in vorteilhafter Weise erreicht, dass die in die Wandstruktur des Wagenkastens 102 eingeleiteten Stützkräfte nicht mehr primär senkrecht zur Wandebene in die Dachstruktur 102.3 eingeleitet werden, sondern primär in der Ebene der abstützenden Seitenwandstruktur 102.4 wirken. Dies ist insoweit von Vorteil, als die Anregung der stützenden Wandstrukturen 102.3, 102.4 zu Biegeschwingungen reduziert wird, die unter akustischen Gesichtspunkten besonders kritisch sind.

Weiterhin entsteht durch die die jeweilige Seitenwandstruktur 102.4 fortsetzende Stützeinrichtung 106, die daran angreifende Trägereinrichtung 107 und die darunter liegende, ebenfalls an der Seitenwandstruktur 102.4 angreifende Dachstruktur 102.3 eine (in der zur Fahrzeuglängsrichtung senkrechten Schnittebene der Figur 3) generell ringförmige, im Wesentlichen trapezförmige Struktur, welche zu einer vorteilhaften Versteifung der Struktur des Wagenkastens 102 führt, welche die durch die Vertiefung 102.2 eingebrachte strukturelle Schwächung der Struktur des Wagenkastens 102 zumindest teilweise kompensiert.

Diese Versteifung der Struktur des Wagenkastens 102 im Bereich der Vertiefung 102.2 hat zudem den Vorteil, dass die Eigenfrequenzen der montierten Gesamtstruktur in höhere, von den Passagieren als weniger störend empfundene Frequenzbereiche verschoben werden.

Wie der Figur 3 zu entnehmen ist, bilden die Montageschienen 106.1 im vorliegenden Beispiel einen Trägeranschlussbereich 106.2 der Stützeinrichtung 106, welcher (wie beschrieben) zum mechanischen Anschluss bzw. zur Befestigung der Trägereinrichtung 107 dient. Dieser Trägeranschlussbereich 106.2 liegt in der Fahrzeughöhenrichtung (z-Achse) auf einem Trägeranschlussniveau TAN in einer Trägeranschlusshöhe TAH über einem Grundniveau GRN, welches durch die Oberseite der Dachstruktur 102.3 am Grund der Vertiefung 102.2 definiert wird.

Der Wagenkasten 102 weist im vorliegenden Beispiel in einem in der Fahrzeuglängsrichtung an die Vertiefung 102.2 angrenzenden Bereich in der Fahrzeughöhenrichtung eine maximale Dachhöhe DH über dem Grundniveau GRN auf, wobei die Trägeranschlusshöhe TAH des Trägeranschlussniveaus über den Grundniveau GRN im vorliegenden Beispiel 30% der maximalen Dachhöhe DH beträgt. Hiermit lässt sich trotz des im Dachbereich stark gewölbten Wagenkastens 102 bei ausreichender Breite der Vertiefung 102.2 eine günstige Einleitung des durch den Stromabnehmer 104 im Betrieb induzierten Körperschalls (also der strukturgebundenen Schwingungsenergie) in die Seitenwandstruktur 102.4 erzielen.

Es versteht sich jedoch, dass die Trägeranschlusshöhe TAH bei anderen Varianten der Erfindung auch anders gewählt sein kann. Insbesondere kann die Trägeranschlusshöhe TAH wenigstens 20% der maximalen Dachhöhe DH, insbesondere 20% bis 50% der maximalen Dachhöhe DH, vorzugsweise 25% bis 40% der maximalen Dachhöhe DH, weiter vorzugsweise 30% bis 35% der maximalen Dachhöhe DH, betragen.

Wie der Figur 3 weiterhin zu entnehmen ist, definiert der Trägeranschlussbereich 106.2 mit einem auf der gegenüberliegenden Fahrzeugseite angeordneten (im vorliegenden Beispiel im Wesentlichen spiegelsymmetrischen) Trägeranschlussbereich 106.2 in der Fahrzeugquerrichtung (y-Achse) eine Anschlussbreite AB (welche letztlich die oben genannte Stützbreite für die Abstützung von Momenten um die Fahrzeuglängsachse darstellt).

Der Wagenkasten 102 weist in einem in der Fahrzeuglängsrichtung an die Vertiefung 102 angrenzenden Bereich auf dem Trägeranschlussniveau TAN in der Fahrzeugquerrichtung eine erste Wagenkastenbreite WB auf, wobei die Anschlussbreite AB im vorliegenden Beispiel 95% der ersten Wagenkastenbreite WB beträgt. Durch diese besonders weit nach außen verlagerte mechanische Anbindung der Trägereinrichtung 107 (mithin also die besonders hohe Stützbreite für Momente um die Fahrzeuglängsachse) kann eine besonders starke Reduktion der Amplitude der schwingungsanregenden Reaktionskräfte und deren unmittelbare Einleitung in die Seitenwandstruktur 102.4 erzielt werden.

Es versteht sich jedoch, dass die Anschlussbreite BA bei anderen Varianten der Erfindung, auch anders gewählt sein kann. Insbesondere kann die Anschlussbreite AB wenigstens 80% der ersten Wagenkastenbreite WB, insbesondere 80% bis 99% der ersten Wagenkastenbreite WB, vorzugsweise 85% bis 97% der ersten Wagenkastenbreite WB, weiter vorzugsweise 90% bis 95% der ersten Wagenkastenbreite WB, betragen.

Wie der Figur 3 weiterhin zu entnehmen ist, bildet die Stützeinrichtung 106 einen Wandabschnitt der Seitenwandstruktur 102.4, dessen zur Fahrzeuglängsrichtung parallele Wandabschnittsmittenebene 106.3 im Bereich des Trägeranschlussniveaus TAN zu einer durch das Grundniveau GRN definierten Grundniveauebene um einen Winkel W = 58° geneigt ist.

Hiermit wird im vorliegenden Beispiel eine im Wesentlichen vollständige bzw. nahtlose Fortsetzung der Seitenwandstruktur 102.4 erzielt, deren Verlauf (in Fahrzeuglängsrichtung) demjenigen der Seitenwandstruktur 102.4 außerhalb des Bereichs der Vertiefung 102.2 entspricht. Mithin bleibt also auch in diesem Bereich die prismatische Gestaltung des Wagenkastens 102, insbesondere im Bereich von dessen Außenhaut, erhalten. Hierdurch ergeben sich im Betrieb des Fahrzeugs 101 günstige Strömungsverhältnisse bzw. werden durch die Stützeinrichtung 106 induzierte aerodynamische Störungen minimiert.

Es versteht sich jedoch, dass die Neigung der Wandabschnittsmittenebene 106.3 bei anderen Varianten der Erfindung auch anders gewählt sein kann. Insbesondere kann die Wandabschnittsmittenebene 106.3 zu der Grundniveauebene um 40° bis 65°, vorzugsweise um 45° bis 60°, weiter vorzugsweise um 50° bis 55° geneigt sein.

Im vorliegenden Beispiel ist die Stromabnehmereinrichtung 104 in einem Stromabnehmeranschlussbereich 104.5 auf einem Mittenbereich 107.5 der Trägereinrichtung 107 abgestützt, wobei der Stromabnehmeranschlussbereich 104.5 in der Fahrzeughöhenrichtung auf einem mittleren Stromabnehmeranschlussniveau SAN in einer Stromabnehmeranschlusshöhe SAH über dem Grundniveau GRN liegt. Das Stromabnehmeranschlussniveau SAN fällt im vorliegenden Beispiel mit der Trägermittenebene TME der Trägereinrichtung 107 zusammen. Dank der Gestaltung der Anschlusselemente als einfache, nach unten abgewinkelte Winkelplatten bzw. Winkelkonsolen 107.4 beträgt die Stromabnehmeranschlusshöhe SAH im vorliegenden Beispiel 20% der maximalen Dachhöhe DH.

Demgemäß liegt das Stromabnehmeranschlussniveau SAN bzw. die Trägermittenebene TME unterhalb des Trägeranschlussniveaus TAN, wodurch trotz des Überstands der Stützeinrichtung 106 über dem Grundniveau GRN der Dachstruktur 102.3 eine besonders vorteilhafte, kompakt bzw. niedrig bauende Gestaltung erzielt wird. Hierdurch ist die Stromabnehmereinrichtung 104 vorteilhaft nahe an der Dachstruktur 102.3 angeordnet, sodass die Stromabnehmereinrichtung 104 die durch die Außenhaut des Wagenkastens 102 definierte Hüllfläche in ihrer Ruheposition (siehe Figur 3) in der Fahrzeughöhenrichtung nicht überragt.

Es versteht sich jedoch, dass bei anderen Varianten der Erfindung auch eine andere Stromabnehmeranschlusshöhe SAH gewählt sein kann. Insbesondere kann die Stromabnehmeranschlusshöhe SAH höchstens 50% der maximalen Dachhöhe DH, insbesondere 10% bis 50% der maximalen Dachhöhe DH, vorzugsweise 20% bis 40% der maximalen Dachhöhe DH, weiter vorzugsweise 25% bis 35% der maximalen Dachhöhe DH, betragen.

Der Trägerrahmen 107.1 ist im vorliegenden Beispiel lediglich in den Wagenkastenanschlussbereichen 107.2 über die Montageschienen 107.4 mit der Seitenwandstruktur 102.4 verbunden. Zwischen den Wagenkastenanschlussbereichen 107.2 ist in der Fahrzeughöhenrichtung ein erster Spalt S1 zwischen dem Trägerrahmen 107.1 und der Dachstruktur 102.3 ausgebildet. Im vorliegenden Beispiel ergibt sich hierdurch eine erste Spaltbreite BS1 des ersten Spalts S1 in der Fahrzeugquerrichtung, die etwa 85% der maximalen Querabmessung bzw. Breitenabmessung BS des Trägerrahmens 107.1 beträgt. Hierdurch wird eine unmittelbare mechanische Anregung der Dachstruktur 102.3 außerhalb des jeweiligen Dachanschlussbereichs 107.2 verhindert.

Die Spalthöhe HS1 (also die Abmessung des ersten Spalts in der Fahrzeughöhenrichtung) ist im vorliegenden Beispiel so gewählt, dass es unter sämtlichen im Normalbetrieb des Fahrzeugs 101 zu erwartenden Lasten (und daraus resultierenden Deformationen des Trägerrahmens 107) außerhalb der Dachanschlussbereiche 107.2 zu keinem Kontakt zwischen den Trägerrahmen 107.1 und der Dachstruktur 102.3 kommt.

Im vorliegenden Beispiel beträgt die erste Spalthöhe HS1 8 mm bis 12 mm, wodurch sich in vorteilhafter Weise eine vergleichsweise niedrig bauende Konfiguration erzielen lässt, sodass die gesamte Bauhöhe der Stromabnehmereinrichtung 104 über der Dachstruktur 102.3 nur vergleichsweise moderat durch die zusätzliche Trägereinrichtung 107.1 erhöht wird.

Der erste Spalt S1 kann grundsätzlich mit einem oder mehreren Vibrationen dämmenden Materialien ausgefüllt sein. Im vorliegenden Beispiel ist der erste Spalt S1 jedoch als Luftspalt ausgebildet, da sich hiermit besonders einfach zu realisierende Konfigurationen ergeben.

Der Trägerrahmen 107.1 ist im vorliegenden Beispiel als Schweißkonstruktion aus einer Mehrzahl von Hohlprofilelementen ausgeführt, sodass eine besonders leicht bauende und steife Gestaltung mit hohen Eigenfrequenzen erzielt wird. Für den Trägerrahmen 107.1 wird im vorliegenden Beispiel Stahl verwendet, da sich aufgrund von dessen Dämpfungseigenschaften besonders günstige Eigenschaften hinsichtlich der Schwingungsreduzierung ergeben. Es versteht sich jedoch, dass bei anderen Varianten der Erfindung auch beliebige andere Materialien, beispielsweise Metalle (wie Aluminium etc.) oder verstärkte Kunststoffe bzw. Verbundwerkstoffe etc. einzeln oder in Kombination zur Anwendung kommen können.

Der Trägerrahmen 107.1 ist im vorliegenden Beispiel als im Wesentlichen starres Bauteil gestaltet. Bei anderen Varianten der Erfindung kann aber auch ein (beispielsweise aus Gummi aufgebautes) Schwingungsreduktionselement in den Kraftfluss zwischen der Isolatoreinrichtung 104.3 und der Dachstruktur 102.3 geschaltet sein. So kann beispielsweise ein solches Schwingungsreduktionselement durch eine elastische, dämpfende Zwischenlage gebildet sein, welche im jeweiligen Wagenkastenanschlussbereich 107.2 zwischen den Trägerrahmen 107.1 und die Montageschienen 107.4 gelegt wird. Ebenso kann eine solche elastische, dämpfende Zwischenlage zusätzlich oder alternativ jeweils zwischen dem Stromabnehmer 104 und dem Trägerrahmen 107.1 angeordnet sein. Ebenso kann ein geeigneter Abschnitt des Trägerrahmens 107.1 im Kraftfluss von der Stromabnehmereinrichtung 104 zur Dachstruktur 102.3 mit entsprechend dämpfenden Eigenschaften versehen sein.

Bei bestimmten Varianten der Erfindung kann zwischen dem Trägerrahmen 107.1 und/oder dem Stromabnehmer 104 und der Struktur des Wagenkastens 102 als Schwingungsreduktionselement wenigstens ein technischer Dämpfer wirken, wie dies in Figur 3 durch die gestrichelte Kontur 107.7 angedeutet ist. Dieser Dämpfer 107.7 kann ausschließlich zur Dämpfung von Schwingungen dienen und über einen breiten Frequenzbereich ausgelegt bzw. optimiert sein, da über den Dämpfer 107.7 keine statischen Kräfte zu übertragen sind. Hierbei ist es insbesondere möglich, den Dämpfer 107.7 für den Bereich besonders störender, typischerweise tiefer Frequenzen auszulegen.

Der Dämpfer 107.7 wirkt bevorzugt zwischen dem Massenschwerpunkt der Stromabnehmereinrichtung 104 und dem Wagenkasten 102. Hierbei kann eine Anordnung gewählt sein, bei welcher der Dämpfer 107.7 auf kürzest möglichem Weg (beispielsweise senkrecht zur Dachstruktur 102.3) mit der Dachstruktur 102.3 verbunden ist, wie dies in Figur 3 dargestellt ist.

Ebenso kann aber auch eine anderweitige Ausrichtung bzw. Wirkrichtung des Dämpfers 107.7 vorgesehen sein. Weiterhin versteht es sich, dass eine Kombination aus zwei oder mehreren, parallel und/oder geneigt zueinander angeordneten bzw. wirkenden Dämpfern 107.7 vorgesehen sein kann. Die Dämpfer 107.7 können dann insbesondere richtungsabhängig unterschiedliche Dämpfungswirkung entfalten, welche auf die spezifischen Anforderungen des konkreten Fahrzeugs 101 abgestimmt ist.

Bei bestimmten Varianten der Erfindung können Schwingungsreduktionselemente in Form von Blockiermassen am Trägerrahmen 107.1 befestigt sein, wie dies in Figur 2 durch die gestrichelten Konturen 107.9 angedeutet ist. Diese Reduktionselemente 107.9 modifizieren das Schwingungsverhalten des Trägerrahmens 107.1 (insbesondere dessen Eigenformen und die Amplituden der Eigenformen) entsprechend, um den Eintrag von Schwingungen in die Dachstruktur 102.3 in den relevanten (nachfolgend noch näher beschriebenen) Frequenzbereichen zu reduzieren. Hierbei sind die Reduktionselemente 107.9 außerhalb des unmittelbaren Kraftflusses zwischen der Stromabnehmereinrichtung 104 und der Seitenwandstruktur 102.4 angeordnet, um das Schwingungsverhalten modifizierend auf den (zu Schwingungen angeregten) Trägerrahmen 107.1 zu wirken.

Die Anordnung der Reduktionselemente 107.9 im Bereich der Stromabnehmereinrichtung 104 bringt dabei den Vorteil mit sich, dass an dieser Stelle die Krafteinleitung von der Stromabnehmereinrichtung 104 in den Trägerrahmen 107.1 erfolgt und folglich dort in der Regel besonders hohe (typischerweise maximale) Schwingungsamplituden auftreten. Demgemäß können die Reduktionselemente 107.9 dort eine besonders gute Modifikationswirkung entfalten.

Das Frequenzspektrum, in dem mit der vorbeschriebenen Gestaltung eine wirksame Geräuschreduktion erzielt wird, ist im vorliegenden Beispiel auf den Wagenkasten 102 abgestimmt. Hierbei werden vor allen Dingen Frequenzen, die im Innenraum 102.1 des Wagenkastens 102 zu erheblichen Resonanzen und damit zu einem hohen Schalldruck führen, gezielt gedämpft.

Im vorliegenden Beispiel wird eine Dämpfung in einem Frequenzbereich von 20 Hz bis 800 Hz erzielt, wobei insbesondere Frequenzbereich von 100 Hz bis 800 Hz eine starke Dämpfung gegenüber einer herkömmlichen Gestaltung, bei welcher die Stromabnehmereinrichtung 104 direkt (also ohne den Trägerrahmen 107.1) auf der Dachstruktur 102.3 montiert ist, erzielt wird. Besonders ausgeprägt ist diese Verbesserung im Frequenzbereich von 200 Hz bis 800 Hz.

Im vorliegenden Beispiel ist weiterhin als Luftschallreduktionseinrichtung eine Abschirmeinrichtung 108 für Luftschall vorgesehen, der von der Stromabnehmereinrichtung 104 induziert wird. Es versteht sich jedoch, dass eine solche Luftschallreduktionseinrichtung bei anderen Varianten der Erfindung auch fehlen kann.

Die Abschirmeinrichtung 108 umfasst im vorliegenden Beispiel eine im Wesentlichen wannenförmige Abschirmung 108.1, welche auf der Unterseite der Trägereinrichtung 107 zwischen der Stromabnehmereinrichtung 104 und der Dachstruktur 102.3 des Wagenkastens 102 angeordnet ist. Die Abschirmung 108.1 überragt die Stromabnehmereinrichtung 104 sowohl in der Fahrzeugquerrichtung als auch in der Fahrzeuglängsrichtung, um eine möglichst großflächige Abschirmung der Dachstruktur 102.3 gegen den von der Stromabnehmereinrichtung 104 induzierten Luftschall zu erzielen.

Die Abschirmung 108.1 weist hierzu in der Fahrzeugquerrichtung eine maximale Breitenabmessung BS2 auf, die etwa 150% der maximalen Stützbreite BI an der Stromabnehmereinrichtung 104 beträgt und damit ebenfalls deutlich größer ist als die maximale Stützbreite BI. Weiterhin weist die Abschirmung 108.1 in der Fahrzeuglängsrichtung hierzu eine maximale Längenabmessung LS auf, die etwa 350% der maximalen Stützlänge LI der Abstützung der Stromabnehmereinrichtung 104 auf der Trägereinrichtung 107 beträgt.

Die Abschirmung 108.1 ist im vorliegenden Beispiel an mehreren Punkten mit der Dachstruktur verbunden. So ist die Abschirmung 108.1 zum einen an der Unterseite des Trägerrahmens 107.1 befestigt. Zum anderen ist die Abschirmung 108.1 außerhalb des Bereichs des Trägerrahmens 107.1 über eine Mehrzahl von über die Dachstruktur 102.3 verteilt angeordneten Schwingungsentkopplungselementen 108.2 auf der Dachstruktur 102.3 abgestützt.

Dies ist bei dem vorliegenden Fahrzeug 101 für den Hochgeschwindigkeitsverkehr von besonderem Vorteil, da in dessen Betrieb zum Teil erhebliche singuläre Druckschwankungen bzw. Druckspitzen (z. B. bei Zugbegegnungen, Tunneleinfahrten etc.) auftreten können, welche erhebliche Lasten senkrecht zur Haupterstreckungsebene der Abschirmung 108.1 bedeuten. Diese verteilte, schwingungsentkoppelte Abstützung der Abschirmung 108.1 sichert die Abschirmung 108.1 in diesem Fall in vorteilhafter Weise gegen übermäßige Deformation, ohne die Abschirmeigenschaften gegen den von der Stromabnehmereinrichtung 104 induzierten Luftschall erheblich zu beeinträchtigen.

Die Eigenfrequenz der Abschirmeinrichtung 108 ist ebenso wie die Eigenfrequenz der Schwingungsentkopplungselemente 108.2 im vorliegenden Beispiel möglichst weitgehend auf das zu erwartende Frequenzspektrum des von der Stromabnehmereinrichtung 104 induzierten Luftschalls sowie wiederum die Struktur des Wagenkastens und deren Resonanzfrequenzen abgestimmt, um eine gute Abschirmwirkung zu erzielen.

Im vorliegenden Beispiel wird auch durch die Abschirmeinrichtung 108 eine Dämpfung in einem Frequenzbereich von 20 Hz bis 1000 Hz erzielt, wobei insbesondere Frequenzbereich von 100 Hz bis 800 Hz eine starke Dämpfung gegenüber einer herkömmlichen Gestaltung ohne Abschirmeinrichtung 108 erzielt wird.

Die Abschirmung 108.1 umfasst im vorliegenden Beispiel ein plattenförmiges, im Wesentlichen ebenes Abschirmelement 108.3, welches der Dachstruktur 102.3 unter Ausbildung eines zweiten Spalts S2 (in der Fahrzeughöhenrichtung) zugeordnet ist. Der zweite Spalt S2 gewährleistet hierbei unter anderem, dass sich das Abschirmelement 108.2 außerhalb seiner Abstützungspunkte möglichst frei deformieren kann, sodass es die Schallenergie aufnehmen und durch die daraus resultierende Deformation zumindest einen Teil in Form von innerer Reibung dissipieren kann.

Der zweite Spalt S2 ist hierzu auf die Schwingungseigenschaften der Abschirmung 108.1 abgestimmt, um die beschriebene Energiedissipation zu ermöglichen. Im vorliegenden Beispiel weist der zweite Spalt S2 hierzu in der Fahrzeughöhenrichtung eine zweite Spalthöhe HS2 auf, die im vorliegenden Beispiel der ersten Spaltshöhe HS1 entspricht es versteht sich jedoch, dass bei anderen Varianten der Erfindung in Abhängigkeit von der Anordnung der Abschirmung 108.1 auch andere Spalthöhen gewählt sein können. Dies gilt insbesondere dann, wenn die Abschirmung 108.1 auf der Oberseite der Trägereinrichtung 107 angeordnet wird.

Der zweite Spalt S2 kann wiederum grundsätzlich ganz oder teilweise mit einem oder mehreren Vibrationen dämpfenden oder dämmenden Materialien ausgefüllt sein. So können beispielsweise mikroperforierte Bleche zur Bedämpfung des Hohlraums eingesetzt werden. Im vorliegenden Beispiel ist jedoch auch der zweite Spalt S2 als Luftspalt ausgebildet, da sich hiermit besonders einfach zu realisierende Konfigurationen ergeben.

Das Abschirmelement 108.3 ist im vorliegenden Fall zum einen mit einem umlaufend an das Abschirmelement 108.3 angrenzenden, in der Fahrzeughöhenrichtung nach oben weisenden Randbereich 108.4 versehen, welcher die Formstabilität der Abschirmung erhöht. Zudem ist das Abschirmelement 108.3 im Bereich der Verbindungspunkte zu den Schwingungsentkopplungselementen 108.2 mit (nicht näher dargestellten) mechanischen Verstärkungseinrichtungen versehen, um seine Formstabilität im Betrieb noch weiter zu erhöhen. Als Verstärkungseinrichtungen können grundsätzlich beliebige geeignete Elemente, wie beispielsweise Rippen, Rinnen, Sicken etc. in beliebiger geeigneter Anordnung vorgesehen sein. Die Gestalt und Anordnung dieser Verstärkungseinrichtungen kann zudem dazu genutzt werden, das Schwingungsverhalten des Abschirmelements 108.3 und damit der Abschirmung 108.3 zu beeinflussen.

Wie insbesondere Figur 5 zu entnehmen ist, sind die Schwingungsentkopplungselemente 108.2 im vorliegenden Beispiel als zylindrische Gummihülsen mit einer ringförmigen Nut 108.5 gestaltet, welche durch eine zugeordnete Bohrung in dem Abschirmelement 108.3 gesteckt werden, sodass die Wandung, welche die Bohrung begrenzt, in der Nut 108.5 einrastet, mithin also ein Formschluss zwischen der Gummihülse 108.2 und dem Abschirmelement 108.3 entsteht.

Die Fixierung erfolgt über Schrauben 108.6, welche durch die Gummihülsen 108.2 hindurch gesteckt werden. Der Kopf der Schrauben 108.6 ist dabei in eine mit der Dachstruktur fest verbundene C-Schiene eingehakt, sodass über die Verschraubungen am freien Ende der Schraube 108.6 eine Fixierung erfolgen kann. Hierbei kann insbesondere über die durch die Verschraubung erzeugte Vorspannung eine Einstellung der Dämpfungseigenschaften der Schwingungsentkopplungselemente 108.2 erzielt werden

Auch für die Abschirmung 108.1, insbesondere das Abschirmelement 108.3, wird im vorliegenden Beispiel wegen der besonders günstigen Eigenschaften hinsichtlich der Schwingungsreduzierung bzw. Schwingungsdämpfung Stahl verwendet. Es versteht sich jedoch, dass bei anderen Varianten der Erfindung auch beliebige andere Materialien, beispielsweise Metalle (wie Aluminium etc.) oder verstärkte Kunststoffe bzw. Verbundwerkstoffe etc. einzeln oder in Kombination zur Anwendung kommen können. Insbesondere können eine oder mehrere so genannte Schwerschichten vollflächig oder in Teilbereichen auf die Abschirmung 108.1 aufgebracht werden, um deren Dämpfungseigenschaften anzupassen.

Wie insbesondere den Figuren 1 und 2 zu entnehmen ist, ist die Vertiefung 102.2, in welcher die Stromabnehmereinrichtung 104 im Dach des Wagenkastens 102 versenkt angeordnet ist, umlaufend in der Fahrzeuglängsrichtung und der Fahrzeugquerrichtung durch eine Begrenzungswand 102.5 begrenzt, welche im Bereich der Stützeinrichtung 106 durch die Innenseite der Stützeinrichtung 106 gebildet wird.

Die Abschirmung 108.1 reicht unter Ausbildung eines schmalen dritten Spaltes S3 umlaufend so nahe an die Begrenzungswand 102.5 heran, dass die Spaltbreite BS3 (also der minimale Abstand zwischen der Abschirmung 108.1 und der Begrenzungswand 102.5) etwa 8 mm beträgt. Hierdurch ist in vorteilhafter Weise sichergestellt, dass die darunterliegende Dachstruktur 102.3 Spalt im Wesentlichen vollständig durch die Abschirmeinrichtung 108 gegen den von der Stromabnehmereinrichtung 104 induzierten Luftschall abgeschirmt ist.

Wie den Figuren 1 und 2 weiterhin zu entnehmen ist, ist die Begrenzungswand 102.5 der Vertiefung 102.2 in einem Randbereich der Vertiefung 102.2 am Übergang zur Außenhaut 102.1 des Wagenkastens in einem vorderen Abschnitt 102.6 und einem hinteren Abschnitt 102.7 nach Art einer Fase abgewinkelt ausgebildet, um an der Außenhaut 102.1 eine definierte Strömungsabrisskante 102.8 bzw. 102.9 für eine die Außenhaut 102.1 überstreichende Luftströmung auszubilden.

Der vordere Abschnitt 102.6 und der hintere Abschnitt 102.7 erstrecken sich dabei zumindest teilweise in der Fahrzeugquerrichtung zwischen zwei seitlichen Abschnitten 102.10 erstrecken, die sich jeweils in der Fahrzeuglängsrichtung erstrecken. Die Fase ist dabei in der Fahrzeugquerrichtung jeweils die gesamte Breite des vorderen Abschnitts 102.6 bzw. des hinteren Abschnitts 102.7 ausgebildet.

Durch diese abgewinkelte Gestaltung der Oberfläche im Nachlauf der Strömungsabrisskante 102.8 bzw. 102.9 kann zum einen in vorteilhafter Weise eine ausgeprägte scharfe Strömungsabrisskante erzielt werden, welche eine saubere, definierte Ablösung der Strömung von der Oberfläche 102.1 gewährleistet. Dies ist im Hinblick auf eine geringe Aufweitung der sich in der abgelösten Strömung ausbildenden Scherschicht (in einer Richtung senkrecht zur Haupterstreckungsebene der Scherschicht) und damit einen geringen Strömungswiderstand des Fahrzeugs 101 von Vorteil.

Ein weiterer Vorteil dieser abgewinkelten Gestaltung in liegt darin, dass bei Fahrt in einer umgekehrten Fahrtrichtung eine dann aus Richtung des gegenüberliegenden Abschnitts 102.7 bzw. 102.6 des Randbereichs der Vertiefung 102.2 kommende Scherschicht nicht wie bei den herkömmlichen Gestaltungen auf eine im Wesentlichen senkrecht zur Auftreffrichtung ausgerichtete Oberfläche auftrifft, sondern auf die entsprechend weniger stark zur Auftreffrichtung geneigte Oberfläche der Fase auftrifft. Dies hat den Vorteil, dass in die auftreffende Scherschicht ein geringerer Impuls eingeleitet wird, sodass sich die Strömung schneller wieder an die Oberfläche 102.1 anlegen und dort eine widerstandsarme Grenzschicht ausbilden kann.

Je nach Größe des Neigungswinkels zwischen der Oberfläche der Außenhaut 102.1 des Wagenkastens und der Oberfläche der Fase 102.7 bzw. 102.6 kann es zwar beim Überströmen der Strömungsabrisskante 102.9 bzw. 102.8 (welches bei dieser umgekehrten Fahrtrichtung dann in umgekehrter Richtung von der Fase zur Außenhaut hin erfolgt) zu einer erneuten lokalen bzw. temporären Ablösung (in Form einer so genannten Ablöseblase) kommen, diese fällt jedoch wegen der günstigeren Neigung zwischen Außenhaut 102.1 und Fase 102.7 bzw. 102.6 geringer als bei den herkömmlichen Gestaltungen aus. Mit anderen Worten wird mit der vorliegenden Erfindung der Aufprallwinkel der Scherschicht auf die Oberfläche reduziert, sodass es zu einem sanfteren Aufprall der Scherschicht auf die Oberfläche der Fase 102.7 bzw. 102.6 kommt, der ein schnelles Anlegen der Strömung an die Oberfläche 102.1 begünstigt und so eine Reduktion des Strömungswiderstands mit sich bringt. Ein weiterer Vorteil dieses sanfteren Aufpralls der Scherschicht auf die Oberfläche liegt in der geringeren Schallemission, die damit einhergeht.

Die Stromabnehmereinrichtung 104 weist im deaktivierten Zustand die in Figur 1 bis 3 dargestellte eingefahrene Position auf, in der sie tief in der durch die Außenhaut 102.1 des Wagenkastens 102 definierten Hüllfläche versenkt ist. Limitierend ist hier lediglich die erforderliche Deckenhöhe im Innenraum 101.1 des Fahrzeugs 101. Im vorliegenden Beispiel ist die Stromabnehmereinrichtung 104 in der eingefahrenen Ruheposition so weit in der Hüllfläche versenkt, dass sie die Hüllfläche 102.1 in der Fahrzeughöhenrichtung (im Bereich der Hörner der Schleifleiste 104.2) nicht überragt. Hierdurch wird eine aerodynamisch besonders günstige Konfiguration erzielt, wobei sich auf die Außenhaut des Wagenkastens aufgesetzte Verkleidungen oder Hutzen erübrigen, welche letztlich trotz aller aerodynamisch optimierter Gestaltung die Widerstandsfläche und damit den Strömungswiderstand des Fahrzeugs erhöhen.

Weiterhin ist die Vertiefung 102.2 (in der Draufsicht von oben auf den Dachbereich des Wagenkastens 102) als Dachausschnitt mit einer Außenkontur gestaltet, die im Wesentlichen der Geometrie bzw. Außenkontur der in ihre Ruheposition eingefahrenen Stromabnehmereinrichtung 104 folgt, sodass durch Vertiefung 102.2 eine möglichst geringe (gegebenenfalls zu Schallemissionen führende) Störung in die Luftströmung eingebracht wird, welche das Dach des Wagenkastens 102 überstreicht. Der Abstand der Außenhaut 102.1 und insbesondere der Begrenzungswand 102.5, zur Stromabnehmereinrichtung 104 ist dabei so gewählt, dass bei aktivierter, die Oberleitung 105 kontaktierender Stromabnehmereinrichtung 104 zwischen den Strom führenden, nicht mit einer elektrischen Isolation versehenen Bauteilen der Stromabnehmereinrichtung 104 und den angrenzenden Teilen des Wagenkastens 102 ein vorgegebener Abstand nicht unterschritten wird, um durch die so geschaffene Luftisolationsstrecke Spannungsüberschläge zu vermeiden.

Wie der Figur 1 weiterhin zu entnehmen ist, ist benachbart zum schleifleistenseitigen Ende der Vertiefung 102.2 eine weitere Vertiefung 102.11 im Dachbereich des Wagenkastens 102 vorgesehen. In dieser weiteren Vertiefung 102.11 sind mit der Stromabnehmereinrichtung 104 verbundene Hochspannungskomponenten 109 der Hochspannungsversorgung des Fahrzeugs 101 angeordnet (wie beispielsweise weitere Isolatoren, Strom- und/oder Spannungswandler, Haupt- und/oder Trennschalter etc.). Die weitere Vertiefung 102.11 ist durch eine Abdeckung 102.12 vollständig überdeckt und in Fahrzeuglängsrichtung von der Vertiefung 102.2 durch eine Trennwand 102.13 getrennt.

In Figur 1 und 2 ist ferner ein Verschmutzungsschutz 110 dargestellt, der ein oder mehrere (zur Fahrzeughöhenrichtung und Fahrzeuglängsrichtung) geneigte Abdeckelemente 110.1 oder dergleichen umfasst (siehe Figur 1), die sich in Fahrzeugquerrichtung im Wesentlichen über die Breite der Vertiefung 102.2 erstrecken. Die Abdeckelemente 110.1 sind auf Konsolen 110.2 (siehe Figur 2) montiert und liegen bündig an der Trennwand 102.13 an. Die Konsolen 110.2 sind ihrerseits auf der Abschirmung 108.1 montiert. Die Abdeckelemente 110.1 sind vorzugsweise als Lochbleche mit beispielsweise einem Lochanteil von 50% gestaltet. Damit wird auch im Falle von Schmutzansammlungen sichergestellt, dass eindringendes Wasser durch einen von den Abdeckelementen 110.1 überdeckten Wasserablauf abfließen kann.

Durch den Verschmutzungsschutz 110 wird verhindert, dass sich größere Gegenstände, wie Äste oder Laub, an der Trennwand 102.13 zwischen den Vertiefungen 102.2 und 102.11 ansammeln können. Durch die geneigte Anordnung der Abdeckelemente 110.1 wird erreicht, dass sich durch die im Fahrbetrieb auftretende Luftströmung derartige Gegenstände gar nicht erst ansammeln können bzw. weggeweht werden.

Die vorliegende Erfindung wurde vorstehend ausschließlich im Zusammenhang mit einem Fahrzeug für einen Triebzug für den Hochgeschwindigkeitsverkehr beschrieben. Es versteht sich jedoch, dass die Erfindung auch im Zusammenhang mit anderen Arten von Schienenfahrzeugen, insbesondere mit anderen Nennbetriebsgeschwindigkeiten, zum Einsatz kommen kann.

## Patentansprüche

1. Schienenfahrzeug, insbesondere für den Hochgeschwindigkeitsverkehr, mit
- einem Wagenkasten (102), der einen Innenraum aufweist und eine Fahrzeuglängsrichtung, eine Fahrzeugquerrichtung sowie eine Fahrzeughöhenrichtung definiert, und
- einer Stromabnehmereinrichtung (104) zur Montage in einer Vertiefung (102.2) in einem Dachbereich des Wagenkastens (102), wobei
- der Wagenkasten im Bereich der Vertiefung (102.2) eine ausgeprägt in der Fahrzeughöhenrichtung verlaufende Seitenwandstruktur (102.4) und eine abgewinkelt zu der Seitenwandstruktur (102.4) sowie im Wesentlichen in der Fahrzeugquerrichtung verlaufende Dachstruktur (102.3) aufweist und
die Stromabnehmereinrichtung (104) über eine die Stromabnehmereinrichtung (104) in der Fahrzeugquerrichtung überragende Trägereinrichtung (107.1) auf dem Wagenkasten (102) abgestützt ist,
**dadurch gekennzeichnet, dass**
- die Trägereinrichtung (107.1) zur Reduktion eines von der Stromabnehmereinrichtung (104) induzierten Eintrags von Schwingungen in die Dachstruktur (102.3) über eine den Verlauf der Seitenwandstruktur (102.4) in der Fahrzeughöhenrichtung im Wesentlichen fortsetzende, die Dachstruktur (102.3) in der Fahrzeughöhenrichtung überragende Stützeinrichtung auf dem Wagenkasten (102) abgestützt ist, wobei
- die Stützeinrichtung zum Anschluss der Trägereinrichtung (107.1) einen Trägeranschlussbereich (106.2) aufweist, der in der Fahrzeughöhenrichtung auf einem Trägeranschlussniveau in einer Trägeranschlusshöhe über einem Grundniveau liegt, welches eine Oberseite der Dachstruktur (102.3) am Grund der Vertiefung (102.2) definiert.

2. Schienenfahrzeug nach Anspruch 1, **dadurch gekennzeichnet, dass**
- der Trägeranschlussbereich (106.2) mit einem auf der gegenüberliegenden Fahrzeugseite angeordneten Trägeranschlussbereich (106.2) in der Fahrzeugquerrichtung eine Anschlussbreite definiert,
und/oder
- der Wagenkasten (102) in einem in der Fahrzeuglängsrichtung an die Vertiefung (102.2) angrenzenden Bereich in der Fahrzeughöhenrichtung eine maximale Dachhöhe über dem Grundniveau aufweist und die Trägeranschlusshöhe wenigstens 20% der maximalen Dachhöhe beträgt, insbesondere 20% bis 50% der maximalen Dachhöhe beträgt, vorzugsweise 25% bis 40% der maximalen Dachhöhe beträgt, weiter vorzugsweise 30% bis 35% der maximalen Dachhöhe beträgt,
und/oder
- der Wagenkasten (102) in einem in der Fahrzeuglängsrichtung an die Vertiefung (102.2) angrenzenden Bereich auf dem Anschlussniveau in der Fahrzeugquerrichtung eine erste Wagenkastenbreite aufweist und die Anschlussbreite wenigstens 80% der ersten Wagenkastenbreite beträgt, insbesondere 80% bis 99% der ersten Wagenkastenbreite beträgt, vorzugsweise 85% bis 97% der ersten Wagenkastenbreite beträgt, weiter vorzugsweise 90% bis 95% der ersten Wagenkastenbreite beträgt,
und/oder
- die Stützeinrichtung einen Wandabschnitt der Seitenwandstruktur (102.4) bildet, dessen zur Fahrzeuglängsrichtung parallele Wandabschnittsmittenebene im Bereich des Trägeranschlussniveaus zu einer durch das Grundniveau definierten Grundniveauebene um 40° bis 65° geneigt ist, vorzugsweise um 45° bis 60° geneigt ist, weiter vorzugsweise um 50° bis 55° geneigt ist.

3. Schienenfahrzeug nach Anspruch 1 oder 2, **dadurch gekennzeichnet, dass**
- die Stützeinrichtung einstückig mit der Seitenwandstruktur (102.4), insbesondere einstückig mit einem Dachlängsträger der Seitenwandstruktur (102.4), ausgebildet ist
und/oder
- die Stützeinrichtung nach Art eines Strangpressprofils ausgebildet ist
und/oder
- die Stützeinrichtung eine in der Fahrzeuglängsrichtung im Wesentlichen prismatische Kontur der Seitenwandstruktur (102.4), insbesondere eine im Wesentlichen prismatische Außenkontur der Seitenwandstruktur (102.4), im Bereich der Vertiefung (102.2) in der Fahrzeuglängsrichtung im Wesentlichen fortsetzt,
und/oder
- die Stützeinrichtung zum Anschluss der Trägereinrichtung (107.1) einen Trägeranschlussbereich (106.2) aufweist, der insbesondere wenigstens ein nach Art einer C-Schiene ausgebildetes Anschlusselement aufweist, und/oder
- die Stützeinrichtung einen Trägeranschlussbereich (106.2) aufweist, der zum Anschluss der Trägereinrichtung (107.1) von oben her ausgebildet ist.

4. Schienenfahrzeug nach einem der vorhergehenden Ansprüche, **dadurch gekennzeichnet, dass**
- die Stromabnehmereinrichtung (104) in wenigstens einem Stromabnehmeranschlussbereich (107.6) auf der Trägereinrichtung (107.1) abgestützt ist, wobei der Stromabnehmeranschlussbereich (107.6) in der Fahrzeughöhenrichtung auf einem mittleren Stromabnehmeranschlussniveau in einer Stromabnehmeranschlusshöhe über einem Grundniveau liegt, welches eine Oberseite der Dachstruktur (102.3) am Grund der Vertiefung (102.2) definiert,
wobei
- der Wagenkasten (102) in einem in der Fahrzeuglängsrichtung an die Vertiefung (102.2) angrenzenden Bereich in der Fahrzeughöhenrichtung eine maximale Dachhöhe über dem Grundniveau aufweist und die Stromabnehmeranschlusshöhe höchstens 50% der maximalen Dachhöhe beträgt, insbesondere 10% bis 50% der maximalen Dachhöhe beträgt, vorzugsweise 20% bis 40% der maximalen Dachhöhe beträgt, weiter vorzugsweise 25% bis 35% der maximalen Dachhöhe beträgt,
und/oder
- die Stützeinrichtung zum Anschluss der Trägereinrichtung (107.1) einen Trägeranschlussbereich (106.2) aufweist, der in der Fahrzeughöhenrichtung auf einem Trägeranschlussniveau über dem Grundniveau liegt, sowie die Trägereinrichtung (107.1) in der Fahrzeughöhenrichtung eine Trägermittenebene definiert, die unterhalb des Trägeranschlussniveaus liegt

5. Schienenfahrzeug nach Anspruch 4, **dadurch gekennzeichnet, dass**
- außerhalb des Wagenkastenanschlussbereichs (107.2) in der Fahrzeughöhenrichtung ein erster Spalt, zwischen der Trägereinrichtung (107.1) und der Dachstruktur (102.3) ausgebildet ist,
wobei
- der erste Spalt insbesondere in der Fahrzeughöhenrichtung eine erste Spalthöhe aufweist, die 2 mm bis 20 mm beträgt, vorzugsweise 5 mm bis 15 mm beträgt, weiter vorzugsweise 8 mm bis 12 mm beträgt,
und/oder
- der erste Spalt insbesondere in der Fahrzeugquerrichtung eine erste Spaltbreite aufweist, die 40% bis 98%, vorzugsweise 60% bis 98%, weiter vorzugsweise 80% bis 98%, einer maximalen Querabmessung der Trägereinrichtung (107.1) in der Fahrzeugquerrichtung beträgt,
und/oder
- der erste Spalt insbesondere als Luftspalt ausgebildet ist
und/oder
- in dem ersten Spalt insbesondere wenigstens ein Schalldämmungselement und/oder wenigstens ein Schalldämpfungselement angeordnet ist.

6. Schienenfahrzeug nach Anspruch 4 oder 5, **dadurch gekennzeichnet, dass**
- die Trägereinrichtung (107.1) wenigstens einen Trägerrahmen umfasst, der einen Wagenkastenanschlussbereich (107.2) und einen Stromabnehmeranschlussbereich (107.6) ausbildet,
wobei
- der Trägerrahmen (107.1) insbesondere im Wesentlichen leiterförmig ausgebildet ist
und/oder
- der Trägerrahmen (107.1) in der Fahrzeugquerrichtung insbesondere zwei seitliche Enden aufweist, an denen jeweils ein Wagenkastenanschlussbereich (107.2) ausgebildet ist,
und/oder
- der Trägerrahmen (107.1) in der Fahrzeugquerrichtung insbesondere in einem Mittenbereich den Stromabnehmeranschlussbereich (107.6) ausbildet.
und/oder
- der Trägerrahmen (107.1) insbesondere eine Mehrzahl von Profilelementen, insbesondere Hohlprofilelemente, umfasst
und/oder
- der Trägerrahmen (107.1) insbesondere wenigstens zwei, vorzugsweise wenigstens drei, in der Fahrzeugquerrichtung verlaufende Profilelemente umfasst, an deren Ende jeweils ein Wagenkastenanschlussbereich (107.2) ausgebildet ist,
und/oder
- der Trägerrahmen (107.1) insbesondere wenigstens ein nach Art einer Winkelplatte ausgebildetes Anschlusselement umfasst, welches einen Teil des Wagenkastenanschlussbereichs (107.2) ausbildet,
und/oder
- der Trägerrahmen (107.1) insbesondere aus wenigstens einem Material aufgebaut ist, das Stahl umfasst.

7. Schienenfahrzeug nach einem der Ansprüche 4 bis 6, **dadurch gekennzeichnet, dass**
- die Trägereinrichtung (107.1) wenigstens ein Schwingungsreduktionselement (107.9) umfasst, welches dazu ausgebildet ist, einen von der Stromabnehmereinrichtung (104) induzierten Eintrag von Schwingungen in die Dachstruktur (102.3) zu reduzieren,
wobei
- das Schwingungsreduktionselement insbesondere in einen Kraftfluss zwischen der Stromabnehmereinrichtung (104) und der Dachstruktur (102.3) des Wagenkastens (102) geschaltet ist
und/oder
- das Schwingungsreduktionselement insbesondere im einem Wagenkastenanschlussbereich (107.2) der Trägereinrichtung (107.1) an der Stützeinrichtung angeordnet ist
und/oder
- das Schwingungsreduktionselement (107.9) insbesondere im
Stromabnehmeranschlussbereich (107.6) angeordnet ist
und/oder
- das Schwingungsreduktionselement (107.9) insbesondere aus wenigstens einem Material aufgebaut ist, das einen Kunststoff, insbesondere Gummi, umfasst.

8. Schienenfahrzeug nach einem der vorhergehenden Ansprüche, **dadurch gekennzeichnet, dass**
- eine Abschirmeinrichtung (108) für von der Stromabnehmereinrichtung (104) induzierten Luftschall vorgesehen ist,
wobei
- die Abschirmeinrichtung (108) zwischen der Stromabnehmereinrichtung (104) und der Dachstruktur (102.3), insbesondere zwischen der Trägereinrichtung (107.1) und der Dachstruktur (102.3), angeordnet ist,
und/oder
- die Abschirmeinrichtung (108) in der Fahrzeugquerrichtung und/oder der Fahrzeuglängsrichtung über die Stromabnehmereinrichtung (104) hinausragt
und/oder
- die Abschirmeinrichtung (108) über eine Mehrzahl von Schwingungsentkopplungselementen (108.2) auf der Dachstruktur (102.3) abgestützt ist
und/oder
- die Abschirmeinrichtung (108) dazu ausgebildet ist, einen von der Stromabnehmereinrichtung (104) induzierten Eintrag von Schwingungen in einem Frequenzbereich von 10 Hz bis 1200 Hz, vorzugsweise von 20 Hz bis 1000 Hz, weiter vorzugsweise von 100 Hz bis 800 Hz, zu dämpfen.

9. Schienenfahrzeug nach Anspruch 8, **dadurch gekennzeichnet, dass**
- die Abschirmeinrichtung (108) ein im Wesentlichen plattenförmiges, insbesondere im Wesentlichen ebenes, Abschirmelement (108.3) umfasst, welches einer Oberseite der Dachstruktur (102.3) unter Ausbildung eines zweiten Spalts zugeordnet ist,
wobei
- der zweite Spalt insbesondere in der Fahrzeughöhenrichtung eine zweite Spalthöhe aufweist, die 40 mm bis 120 mm beträgt, vorzugsweise 60 mm bis 100 mm beträgt, weiter vorzugsweise 70 mm bis 90 mm beträgt,
und/oder
- der zweite Spalt insbesondere als Luftspalt ausgebildet ist
und/oder
- in dem zweiten Spalt insbesondere wenigstens ein Schalldämmungselement und/oder wenigstens ein Schalldämpfungselement angeordnet ist.
und/oder
- die Abschirmeinrichtung (108) im Wesentlichen wannenförmig mit einem umlaufend an das Abschirmelement (108.3) angrenzenden, insbesondere in der Fahrzeughöhenrichtung nach oben weisenden, Randbereich (108.4) ausgebildet ist
und/oder
- das Abschirmelement (108.3) aus wenigstens einem Material aufgebaut ist, das Stahl umfasst.

10. Schienenfahrzeug nach einem der Ansprüche 8 oder 9, **dadurch gekennzeichnet, dass**
- die Vertiefung (102.2) zumindest abschnittsweise, insbesondere umlaufend, in der Fahrzeuglängsrichtung und/oder der Fahrzeugquerrichtung durch eine Begrenzung (102.5), insbesondere eine Begrenzungswand, begrenzt ist,
wobei
- die Abschirmeinrichtung (108) insbesondere zumindest abschnittsweise, vorzugsweise umlaufend, an die Begrenzung (102.5) unter Ausbildung eines schmalen dritten Spaltes heranreicht, dessen Spaltbreite 2 mm bis 20 mm beträgt, vorzugsweise 5 mm bis 15 mm beträgt, weiter vorzugsweise 8 mm bis 12 mm beträgt.

11. Schienenfahrzeug nach Anspruch 10, **dadurch gekennzeichnet, dass**
- die Begrenzung (102.5) der Vertiefung (102.2) in einem Randbereich der Vertiefung (102.2) am Übergang zu einer Außenhaut des Wagenkastens (102) in wenigstens einem gefasten Abschnitt (102.6, 102.7) nach Art einer Fase abgewinkelt ausgebildet ist, um eine definierte Strömungsabrisskante (102.8, 102.9) für eine die Außenhaut des Wagenkastens (102) überstreichende Luftströmung auszubilden, wobei
- der Randbereich der Vertiefung (102.2) einen vorderen Abschnitt (102.6) und einen hinteren Abschnitt (102.7) aufweist, die sich jeweils zumindest teilweise in der Fahrzeugquerrichtung zwischen zwei seitlichen Abschnitten (102.10) erstrecken, die sich jeweils in der Fahrzeuglängsrichtung erstrecken, und
- sich der wenigstens eine gefaste Abschnitt (102.6, 102.7) zumindest über 75%, vorzugsweise zumindest über 90%, weiter vorzugsweise über im Wesentlichen 100%, des vorderen Abschnitts (102.6) und/oder des hinteren Abschnitts (102.7) erstreckt.

12. Schienenfahrzeug nach Anspruch 10 oder 11, **dadurch gekennzeichnet, dass**
- die Stromabnehmereinrichtung (104) eine in die Vertiefung (102.2) eingefahrene Ruheposition aufweist, wobei
- die Stromabnehmereinrichtung (104) eine durch die Außenhaut (102.1) des Wagenkastens (102) definierte Hüllfläche in der Ruheposition in der Fahrzeughöhenrichtung um höchstens 90 mm, vorzugsweise höchstens 70 mm, weiter vorzugsweise höchstens 50 mm, überragt
und/oder
- die Stromabnehmereinrichtung (104) eine durch die Außenhaut (102.1) des Wagenkastens (102) definierte Hüllfläche in der Ruheposition in der Fahrzeughöhenrichtung im Wesentlichen nicht überragt.

13. Schienenfahrzeug nach einem der vorhergehenden Ansprüche, **dadurch gekennzeichnet, dass**
- die Stromabnehmereinrichtung (104) eine elektrische Isolation zur Potenzialtrennung eines auf Hochspannungsniveau liegenden Teils der Stromabnehmereinrichtung (104) gegenüber der Trägereinrichtung (107.1) aufweist,
wobei
- die Stromabnehmereinrichtung (104) insbesondere wenigstens einen an der Trägereinrichtung (107.1) angelenkten ersten Schwenkarm aufweist, der eine Isolatoreinrichtung zur Potenzialtrennung umfasst,
und/oder
- die Stromabnehmereinrichtung (104) insbesondere nach Art eines Halbscherenstromabnehmers ausgebildet ist, dessen an der Trägereinrichtung (107.1) angelenkte Komponenten mit einer Isolatoreinrichtung zur Potenzialtrennung versehen sind.

14. Schienenfahrzeug nach einem der vorhergehenden Ansprüche, **dadurch gekennzeichnet, dass** es für den Hochgeschwindigkeitsverkehr mit einer Nennbetriebsgeschwindigkeit oberhalb von 250 km/h, insbesondere oberhalb von 300 km/h, insbesondere von 320 km/h bis 390 km/h, ausgebildet ist.

## Claims

1. A rail vehicle, in particular for high-speed travel, with
- a wagon body (102) having an interior space and defining a vehicle longitudinal direction, a vehicle transverse direction and a vehicle height direction, and
- a pantograph device (104) for mounting in a recess (102.2) in a roof region of said wagon body (102), wherein
- said wagon body in the region of said recess (102.2) has a side wall structure (102.4) pronouncedly extending in said vehicle height direction and has a roof structure (102.3) extending in an angled manner with respect to said side wall structure (102.4) and extending substantially in said vehicle transverse direction, and
- said pantograph device (104) is supported on said wagon body (102) via a carrier device (107.1) protruding beyond said pantograph device (104) in said vehicle transverse direction,
**characterized in that**
- said carrier device (107.1), for reduction of an introduction of vibrations induced by said pantograph device (104) into said roof structure (102.3), is supported on said wagon body (102) via a support device, which substantially continues the course of said side wall structure (102.4) in said vehicle height direction and protrudes beyond said roof structure (102.3) in said vehicle height direction, wherein
- said support device for connection of said carrier device (107.1) has a carrier connection region (106.2), which is located in said vehicle height direction at a carrier connection level in a carrier connection height above a base level, which defines a top side of said roof structure (102.3) at the bottom of said recess (102.2).

2. Rail vehicle according to claim 1, **characterized in that**
- said carrier connection region (106.2), in said vehicle transverse direction, defines a connection width with a carrier connection region (106.2) arranged on the opposite vehicle side,
and/or
- said wagon body (102), in a region adjacent to said recess (102.2) in said vehicle longitudinal direction, has a maximum roof height in said vehicle height direction above said base level, and said carrier connection height is at least 20% of said maximum roof height, in particular is 20% to 50% of said maximum roof height, preferably is 25% to 40% of said maximum roof height, more preferably is 30% to 35% of said maximum roof height,
and/or
- said wagon body (102), in a region adjacent to said recess (102.2) in said vehicle longitudinal direction, on said carrier connection level has a first wagon body width in said vehicle transverse direction, and said carrier connection width is at least 80% of said first wagon body width, in particular is 80% to 99% of said first wagon body width, preferably is 85% to 97% of said first wagon body width, more preferably is 90% to 95% of said first wagon body width,
and/or
- said support device forms a wall section of said side wall structure (102.4), whose wall section central plane extending parallel to said vehicle longitudinal direction, in the region of said carrier connection level, is inclined by 40° to 65°, preferably by 45° to 60°, more preferably inclined by 50° to 55°, with respect to a base level plane defined by said base level.

3. Rail vehicle according to claim 1 or 2, **characterized in that**
- said support device is monolithically formed with said side wall structure (102.4), in particular with a longitudinal roof beam of said side wall structure (102.4),
and/or
- said support device is formed in the manner of an extruded profile,
and/or
- said support device, in said vehicle longitudinal direction and in the region of said recess (102.2), substantially continues a contour of said side wall structure (102.4) which is substantially prismatic in said vehicle longitudinal direction, in particular a substantially prismatic outer contour of said side wall structure (102.4),
and/or
- said support device has a carrier connection region (106.2) for connection of said carrier device (107.1), which in particular has at least one connection element formed in the manner of a C-rail,
and/or
- said support device has a carrier connection region (106.2), which is configured for connection of said carrier device (107.1) from above.

4. Rail vehicle according to any one of the preceding claims, **characterized in that**
- said pantograph device (104) is supported in at least one pantograph connection region (107.6) on said carrier device (107.1), wherein said pantograph connection region (107.6), in said vehicle height direction, is located at a middle pantograph connection level in a pantograph connection height above a base level, which defines an upper side of said roof structure (102.3) at the bottom of said recess (102.2),
wherein
- said wagon body (102), in a region adjacent to said recess (102.2) in said vehicle longitudinal direction, has a maximum roof height in said vehicle height direction above said base level, and said pantograph connection height is at most 50% of said maximum roof height, in particular 10% to 50% of said maximum roof height, preferably 20% to 40% of said maximum roof height, more preferably 25% to 35% of said maximum roof height,
and/or
- said support device has a carrier connection region (106.2) for connection of said carrier device (107.1), which is located, in said vehicle height direction, at a carrier connection level above said base level, and said carrier device (107.1) in said vehicle height direction defines a beam central plane, which is located below said carrier connection level.

5. Rail vehicle according to claim 4, **characterized in that**
- outside said wagon body connection region (107.2), in said vehicle height direction, a first gap is formed between said carrier device (107.1) and said roof structure (102.3),
wherein
- said first gap, in particular in said vehicle height direction has a first gap height, which is 2 mm to 20 mm, preferably 5 mm to 15 mm, more preferably 8 mm to 12 mm,
and/or
- said first gap has a first gap width in said vehicle transverse direction, which in particular is 40% to 98%, preferably 60% to 98%, more preferably 80% to 98 %, of a maximum transverse dimension of said carrier device (107.1) in said vehicle transverse direction,
and/or
- sad first gap, in particular, is formed as an air gap,
and/or
- in particular at least one sound insulation element and/or at least one sound damping element is arranged in said first gap.

6. Rail vehicle according to claim 4 or 5, **characterized in that**
- said carrier device (107.1) comprises at least one carrier frame, which forms a wagon body connection region (107.2) and a pantograph connection region (107.6),
wherein
- said carrier frame (107.1) in particular is substantially ladder-shaped,
and/or
- said carrier frame (107.1), in said vehicle transverse direction, in particular, has two lateral ends, on each of which a wagon body connection region (107.2) is formed,
and/or
- said carrier frame (107.1), in said vehicle transverse direction, in particular, in a central region forms said pantograph connection region (107.6),
and/or
- said carrier frame (107.1), in particular, comprises a plurality of profile elements, in particular hollow profile elements,
and/or
- said carrier frame (107.1), in particular, comprises at least two, preferably at least three, profile elements extending in said vehicle transverse direction, at the end of each of which a wagon body connection region (107.2) is formed,
and/or
- said carrier frame (107.1) in particular comprises at least one connection element formed in the manner of an angle-plate, which forms part of said wagon body connection region (107.2),
and/or
- said carrier frame (107.1) is constructed in particular of at least one material that comprises steel.

7. Rail vehicle according to one of claims 4 to 6, **characterized in that**
- said carrier device (107.1) comprises at least one vibration reduction element (107.9), which is configured to reduce an input of vibrations induced by said pantograph device (104) into said roof structure (102.3),
wherein
- said vibration reduction element in particular is arranged in a force flow between said pantograph device (104) and said roof structure (102.3) of said wagon body (102),
and/or
- said vibration reduction element in particular is arranged in a wagon body connection region (107.2) of said carrier device (107.1) to said support device,
and/or
- said vibration reduction element (107.9) in particular is arranged in said pantograph connection region (107.6),
and/or
- said vibration reduction element (107.9) in particular is formed of at least one material comprising a plastic, in particular rubber.

8. Rail vehicle according to any one of the preceding claims, **characterized in that**
- a shielding device (108) for airborne sound induced by said pantograph device (104) is provided,
wherein
- said shielding device (108) is arranged between said pantograph device (104) and said roof structure (102.3), in particular between said carrier device (107.1) and said roof structure (102.3),
and/or
- said shielding device (108) protrudes beyond said pantograph device (104) in said vehicle transverse direction and/or in said vehicle longitudinal direction,
and/or
- said shielding device (108) is supported on said roof structure (102.3) via a plurality of vibration decoupling elements (108.2),
and/or
- said shielding device (108) is configured to damp an input of vibrations induced by said pantograph device (104) in a frequency range from 10 Hz to 1200 Hz, preferably from 20 Hz to 1000 Hz, more preferably from 100 Hz to 800 Hz.

9. Rail vehicle according to claim 8, **characterized in that**
- said shielding device (108) comprises a substantially plate-shaped, in particular a substantially planar, shielding element (108.3), which is associated to a top side of said roof structure (102.3) under the formation of a second gap,
wherein
- said second gap, in particular, in said vehicle height direction has a second gap height, which is 40mm to 120mm, preferably 60mm to 100mm, more preferably 70mm to 90mm,
and/or
- said second gap, in particular, is formed as an air gap,
and/or
- in particular, at least one sound insulation element and/or at least one sound damping element is arranged in said second gap,
and/or
- said shielding device (108), in particular, is substantially tub-shaped with a circumferentially extending edge region (108.4) located adjacent to the shielding element (108.3) and facing upward in said vehicle height direction,
and/or
- said shielding element (108.3) is constructed of at least one material which comprises steel.

10. Rail vehicle according to claim 8 or 9, **characterized in that**
- said recess (102.2) at least partially, in particular circumferentially, in said vehicle longitudinal direction and/or in said vehicle transverse direction, is confined by a boundary (102.5), in particular by a boundary wall,
wherein
- said shielding device (108) in particular at least section-wise, preferably circumferentially, reaches to said boundary (102.5) under formation of a narrow third gap, whose gap width is 2 mm to 20 mm, preferably 5 mm to 15 mm, more preferably 8 mm to 12 mm.

11. Rail vehicle according to claim 10, **characterized in that**
- said boundary (102.5) of said recess (102.2), in an edge region of said recess (102.2) at the transition to an outer skin of said wagon body (102), in at least one chamfered section (102.6, 102.7), is formed angled in the manner of a chamfer, in order to form a defined flow separation edge (102.8, 102.9) for an air flow sweeping over said outer skin of said wagon body (102), wherein
- said edge region of said recess (102.2) has a front section (102.6) and a rear section (102.7) each extending at least partially in said vehicle transverse direction between two lateral sections (102.10) each extending in said vehicle longitudinal direction, and
- said at least one chamfered section (102.6, 102.7) extends at least over 75%, preferably at least over 90%, more preferably over substantially 100%, of said front section (102.6) and/or of said rear section (102.7).

12. Rail vehicle according to claim 10 or 11, **characterized in that**
- said pantograph device (104) has a rest position retracted into said recess (102.2), wherein
- said pantograph device (104), in said rest position, in said vehicle height direction, protrudes beyond an envelope surface defined by the outer skin (102.1) of said wagon body (102) by at most 90 mm, preferably at most 70 mm, more preferably at most 50 mm,
and/or
- said pantograph device (104), in said rest position, in said vehicle height direction, substantially does not protrude beyond an envelope surface defined by the outer skin (102.1) of said wagon body (102).

13. Rail vehicle according to any one of the preceding claims, **characterized in that**
- said pantograph device (104) has an electrical isolation for potential separation of a part of said pantograph device (104) located at high voltage level with respect to said carrier device (107.1),
wherein
- said pantograph device (104), in particular, has at least one first pivot arm hinged to said carrier device (107.1) hinged first pivot arm, which comprises an isolator device for potential separation,
and/or
- said pantograph device (104), in particular is configured in the manner of a half scissor pantograph whose components which are hinged to said carrier device (107.1) are provided with an isolator device for potential separation.

14. Rail vehicle according to any one of the preceding claims, **characterized in that** it is configured for high-speed travel at a nominal travel speed above 250 km/h, in particular above 300 km/h, in particular from 320 km/h to 390 km/h.

## Revendications

1. Véhicule ferroviaire, en particulier pour la circulation à grande vitesse, comprenant
- une caisse de voiture (102) ayant un espace intérieur et définissant une direction longitudinale du véhicule, une direction transversale du véhicule et une direction de hauteur du véhicule, et
- un dispositif pantographe (104) destiné à être monté dans un renfoncement (102.2) dans une zone de toit de la caisse du véhicule (102), dans lequel
- la caisse de voiture, au niveau du renfoncement (102.2), a une structure de paroi latérale (102.4) s'étendant de manière prononcée dans la direction de hauteur du véhicule et une structure de toit (102.3) s'étendant de manière inclinée par rapport à la structure de paroi latérale (102.4) et s'étendant sensiblement dans la direction transversale du véhicule, et
- le dispositif pantographe (104) est supporté sur la caisse de voiture (102) par un dispositif porteur (107.1) dépassant le dispositif pantographe (104) dans la direction transversale du véhicule,
**caractérisé en ce que**
- le dispositif porteur (107.1), pour réduire une entrée de vibrations induites par le dispositif pantographe (104) dans la structure de toit (102.3), est supporté sur la caisse de voiture (102) via un dispositif de support qui prolonge essentiellement le trajet de la structure de paroi latérale (102.4) dans la direction de hauteur du véhicule et dépasse de la structure de toit (102.3) dans la direction de hauteur du véhicule, dans lequel
- le dispositif de support, pour connecter le dispositif porteur (107.1), comporte une région de connexion de porteur (106.2), la région de connexion de porteur (106.2) se trouvant dans la direction de la hauteur du véhicule à un niveau de connexion de porteur situé au-dessus d'un niveau de base, que définit une face supérieure de la structure de toit (102.3) au bas du renfoncement (102.2).

2. Véhicule ferroviaire selon la revendication 1, **caractérisé en ce que**
- la région de connexion de porteur (106.2) et une région de connexion de porteur opposée (106.2) dans la direction transversale du véhicule définissent une largeur de connexion,
et/ou
- la caisse de voiture (102), dans une région de véhicule adjacente au renfoncement (102.2) dans la direction longitudinale du véhicule, a une hauteur maximale de toit au-dessus du niveau de base dans la direction de hauteur du véhicule, et le niveau de connexion de porteur est au moins 20% de la hauteur maximale du toit, en particulier de 20% à 50% de la hauteur maximale du toit, de préférence 25% à 40% de la hauteur maximale du toit, plus préférablement 30% à 35% de la hauteur maximale du toit,
et/ou
- la caisse de la voiture (102), dans une région de véhicule adjacente au renfoncement (102.2) dans la direction longitudinale du véhicule, au niveau de connexion de porteur a une première largeur de caisse dans la direction transversale du véhicule, et la largeur de connexion est au moins 80% de la première largeur de caisse, en particulier 80% à 99% de la première largeur de caisse, de préférence 85% à 97% de la première largeur de caisse, de manière davantage préférée 90% à 95% de la première largeur de caisse,
et/ou
- le dispositif de support forme une portion de paroi de la structure de paroi latérale (102.4), un plan central de portion de paroi parallèle a la direction longitudinale du véhicule, au niveau du niveau de connexion de porteur est incliné par 40° à 65°, de préférence par 45° à 60°, plus préférablement par 50° à 55°, par rapport à un plan de niveau de base défini par le niveau de base.

3. Véhicule ferroviaire selon la revendication 1 ou 2, **caractérisé en ce que**
- le dispositif de support est formé de manière intégrale avec la structure de paroi latérale (102.4), en particulier de manière intégrale avec un longeron de toit de la structure de paroi latérale (102.4),
et/ou
- le dispositif de support est formé à la manière d'un profilé extrudé,
et/ou
- le dispositif de support, dans la direction longitudinale du véhicule et dans la région du renfoncement (102.2), sensiblement continue un contour de la structure de paroi latérale (102.4) sensiblement prismatique dans la direction longitudinale du véhicule, en particulier un contour extérieur sensiblement prismatique de la structure de paroi latérale (102.4),
et/ou
- le dispositif de support pour connecter le dispositif porteur (107.1) présente une région de connexion de porteur (106.2) qui comprend notamment au moins un élément de connexion conçu à la manière d'un rail en C,
et/ou
- le dispositif support présente une région de connexion de porteur (106.2) qui est configurée pour le raccordement du dispositif porteur (107.1) par dessus.

4. Véhicule ferroviaire selon l'une des revendications précédentes, **caractérisé en ce que**
- le dispositif pantographe (104) est supporté dans au moins une région de connexion de pantographe (107.6) sur le dispositif porteur (107.1), dans laquelle la région de connexion de pantographe (107.6), dans la direction de hauteur du véhicule, est située au niveau d'un niveau médiane de connexion de pantographe dans une hauteur de connexion de pantographe au dessus d'un niveau de base, que définit une face supérieure de la structure de toit (102.3) au bas du renfoncement (102.2),
dans lequel
- la caisse de voiture (102), dans une région de véhicule adjacente au renfoncement (102.2) dans la direction longitudinale du véhicule, a une hauteur maximale de toit au-dessus du niveau de base dans la direction de hauteur du véhicule, et la hauteur de connexion de pantographe est au maximum 50% de la hauteur maximale du toit, en particulier 10% à 50% de la hauteur maximale du toit, de préférence 20% à 40% de la hauteur maximale du toit, plus préférablement 25% à 35% de la hauteur maximale du toit,
et/ou
- le dispositif de support pour la connexion du dispositif porteur (107.1) a une région de connexion de porteur (106.2) qui se situe dans la direction de la hauteur du véhicule à un niveau de connexion de porteur au-dessus du niveau de base, et le dispositif porteur (107.1) dans la direction de la hauteur du véhicule définit un plan central de porteur, qui se trouve en dessous du niveau de connexion de porteur.

5. Véhicule ferroviaire selon la revendication 4, **caractérisé en ce que**
- à l'extérieur de la région de connexion de caisse (107.2) dans la direction de hauteur du véhicule, une première fente est formée entre le dispositif porteur (107.1) et la structure de toit (102.3),
dans lequel
- la première fente, dans la direction de hauteur du véhicule, en particulier présente une première hauteur de fente qui est 2 mm à 20 mm, de préférence 5 mm à 15 mm, plus préférablement 8 mm à 12 mm,
et/ou
- la première fente, dans la direction transversale du véhicule, en particulier, a une première largeur de fente qui est 40% et 98%, de préférence 60% à 98%, plus préférablement 80% à 98 %, d'une dimension transversale maximale du dispositif porteur (107.1) dans la direction transversale du véhicule,
et/ou
- la première fente, en particulier, est une fente d'air,
et/ou
- en particulier, au moins un élément d'isolation acoustique et/ou au moins un élément d'atténuation acoustique est situé dans la première fente.

6. Véhicule ferroviaire selon la revendication 4 ou 5, **caractérisé en ce que**
- le dispositif porteur (107.1) comprend au moins un cadre porteur formant une région de connexion de caisse (107.2) et une région de connexion de pantographe (107.6),
dans lequel
- le cadre porteur (107.1) est notamment sensiblement en forme d'échelle,
et/ou
- le cadre porteur (107.1), dans la direction transversale du véhicule, présente notamment deux extrémités latérales, à chacune desquelles est formée une région de connexion de caisse (107.2),
et/ou
- le cadre porteur (107.1), dans la direction transversale du véhicule, en particulier dans une région centrale forme la région de connexion de pantographe (107.6),
et/ou
- le cadre porteur (107.1) en particulier comprend une pluralité d'éléments profilés, en particulier des éléments profilés creux,
et/ou
- le cadre porteur (107.1) en particulier comprend au moins deux, de préférence au moins trois, éléments profilés s'étendant dans la direction transversale du véhicule, à l'extrémité de chacun desquels une région de connexion de caisse (107.2) est formée,
et/ou
- le cadre porteur (107.1) en particulier comprend au moins un élément de liaison en forme de plaque cornière qui fait partie de la région de connexion de caisse (107.2),
et/ou
- le cadre porteur (107.1) en particulier est constitué d'au moins un matériau que comprend de l'acier.

7. Véhicule ferroviaire selon l'une des revendications 4 à 6, **caractérisé en ce que**
- le dispositif porteur (107.1) comprend au moins un élément de réduction de vibration (107.9) qui est configuré pour réduire une entrée de vibrations induites par le dispositif pantographe (104) dans la structure de toit (102.3),
dans lequel
- l'élément de réduction de vibration, en particulier, est situé dans un flux de force entre le dispositif pantographe (104) et la structure de toit (102.3) de la caisse (102),
et/ou
- l'élément de réduction de vibration, en particulier, est situé dans une zone de connexion de caisse (107.2) du dispositif porteur (107.1) au dispositif de support,
et/ou
- l'élément de réduction de vibration (107.9) en particulier est situé dans la région de connexion de pantographe (107.6),
et/ou
- l'élément de réduction de vibration (107.9) en particulier est formé par au moins un matériau comprenant une matière plastique, en particulier du caoutchouc.

8. Véhicule ferroviaire selon l'une des revendications précédentes, **caractérisé en ce que**
- il est prévu un dispositif de protection (108) pour le bruit aérien du dispositif pantographe (104),
dans lequel
- le dispositif de protection (108) est situé entre le dispositif pantographe (104) et la structure de toit (102.3), en particulier entre le dispositif porteur (107.1) et la structure de toit (102.3),
et/ou
- le dispositif de protection (108), dans la direction transversale du véhicule et/ou dans la direction longitudinale du véhicule, fait saillie au-delà du dispositif pantographe (104),
et/ou
- le dispositif de protection (108) est supportée sur la structure de toit (102.3) via une pluralité d'éléments de découplage de vibrations (108.2),
et/ou
- le dispositif de protection (108) est adapté pour atténuer une entrée de vibrations induites par le dispositif pantographe (104) dans une plage de fréquences de 10 Hz à 1200 Hz, de préférence de 20 Hz à 1000 Hz, plus préférablement de 100 Hz à 800 Hz.

9. Véhicule ferroviaire selon la revendication 8, **caractérisé en ce que**
- le dispositif de protection (108) comprend un élément de protection (108.3) sensiblement en forme de plaque, en particulier sensiblement plane, qui est associé à une face supérieure de la structure de toit (102.3) en formant une deuxième fente,
dans lequel
- la deuxième fente, dans la direction de hauteur du véhicule, en particulier a une deuxième hauteur de 40 mm à 120 mm, de préférence de 60 mm à 100 mm et plus préférentiellement de 70 mm à 90 mm,
et/ou
- la deuxième fente en particulier est formée comme fente d'air,
et/ou
- en particulier au moins un élément d'isolation acoustique et/ou au moins un élément d'atténuation acoustique est situé dans la deuxième fente,
et/ou
- le dispositif de protection (108) en particulier est sensiblement en forme de carter avec une région de bord (108.4) circonférentielle adjacente à l'élément de protection (108.3) et faisant face vers le haut dans la direction de la hauteur du véhicule,
et/ou
- l'élément de protection (108.3) est constitué d'au moins un matériau qui comprend de l'acier.

10. Véhicule ferroviaire selon l'une des revendications 8 ou 9, **caractérisé en ce que**
- le renfoncement (102.2) au moins partiellement, en particulier circonférentiellement, dans la direction longitudinale du véhicule et/ou dans la direction transversale du véhicule, est confinée par une délimitation (102.5), en particulier une paroi de délimitation,
dans lequel
- le dispositif de protection (108), en particulier au moins par sections, de préférence circonférentiellement, s'approche à la délimitation (102.5) en formant une troisième fente étroite dont la largeur de fente est 2 mm à 20 mm, de préférence 5 mm à 15 mm, et plus préférentiellement 8 mm à 12 mm.

11. Véhicule ferroviaire selon la revendication 10, **caractérisé en ce que**
- la délimitation (102.5) du renfoncement (102.2), dans une région de bord du renfoncement (102.2) au passage vers une peau externe de la caisse (102), dans au moins une section chanfreinée (102.6, 102.7), est formé en angle en manière d'un chanfrein pour former une arête de séparation définie (102.8, 102.9) pour le flux d'air balayant la peau extérieure de la caisse de wagon (102), dans lequel
- la région de bord du renfoncement (102.2) présente une partie avant (102.6) et une partie arrière (102.7) chacune s'étendant au moins partiellement dans la direction transversale du véhicule entre deux sections latérales (102.10) s'étendant chacune dans la direction longitudinale du véhicule, et
- la au moins une section chanfreinée (102.6, 102.7) s'étend sur au moins 75%, de préférence sur au moins 90%, plus préférentiellement sur sensiblement 100% de la partie avant (102.6) et/ou de la partie arrière (102.7).

12. Véhicule ferroviaire selon la revendication 10 ou 11, **caractérisé en ce que**
- le dispositif pantographe (104) a une position de retrait retraitée dans l'évidement (102.2), dans lequel
- le dispositif pantographe (104), dans la position de repos, fait saillie, dans la direction de hauteur du véhicule, par rapport a une surface enveloppante définie par la peau extérieure (102.1) de la caisse de wagon (102) d'au plus 90 mm, de préférence d'au plus 70 mm, mieux encore d'au plus 50 mm,
et/ou
- le dispositif pantographe (104), dans la position de repos, essentiellement ne fait pas saillie, dans la direction de hauteur du véhicule, par rapport a une surface enveloppante définie par la peau extérieure (102.1) de la caisse de wagon (102).

13. Véhicule ferroviaire selon l'une des revendications précédentes, **caractérisé en ce que**
- le dispositif pantographe (104) présente une isolation électrique pour une séparation de potentiel d'une partie située au niveau de tension élevé du dispositif pantographe (104) par rapport au dispositif porteur (107.1),
dans laquelle
- le dispositif pantographe (104) en particulier comporte au moins un premier bras pivotant articulé sur le dispositif porteur (107.1) et qui comprend un dispositif isolant pour la séparation de potentiel,
et/ou
- le dispositif pantographe (104) en particulier est conçu à la manière d'un pantographe demi-ciseaux dont les composants articulés sur le dispositif porteur (107.1) sont pourvus d'un dispositif isolant pour la séparation de potentiel.

14. Véhicule ferroviaire selon l'une des revendications précédentes, **caractérisé en ce qu'**il est conçu pour le trafic à grande vitesse à une vitesse de fonctionnement nominale supérieure à 250 km/h, en particulier supérieure à 300 km/h, en particulier de 320 km/h à 390 km/h.
